# EUROPEAN PATENT APPLICATION

(11) **EP 4 696 498 A1**
(43) Date of publication of application: **18.02.2026**
(21) Application number: 25195608.2
(22) Date of filing: 13.08.2025
(51) Int. Cl.: B32B 7/12, B32B 7/02, B32B 7/027, B32B 9/04, B32B 27/08, B32B 27/16, B32B 27/18

(54) **METHODS FOR MANUFACTURING THERMALLY PROTECTED POLYMER COMPOSITE STRUCTURE**

(30) Priority: 14.08.2024 US 202418804329
(71) Applicant: The Boeing Company, Arlington, VA 22202 (US)
(72) Inventor: O'Hara, Jeremy N., Arlington, 22202 (US); Belt, Chad D., Arlington, 22202 (US); Pantoja, Marcos, Arlington, 22202 (US); Rhodes, Charles A., Arlington, 22202 (US); Thomas, James A., Arlington, 22202 (US); Lloyd, Evan M., Arlington, 22202 (US)
(74) Representative: Arnold & Siedsma

(57) **Abstract**

A method for manufacturing a thermally protected polymer composite structure using a thermal barrier layer, the thermal barrier layer being porous and including a tool-side surface and a non-tool-side surface opposed from the tool-side surface, the method including co-bonding an adhesive onto the non-tool-side surface of the thermal barrier layer to yield a coated thermal barrier layer comprising a coated surface, and co-bonding a polymer matrix composite material onto the coated surface of the coated thermal barrier layer.

## Description

### FIELD

The present disclosure relates to thermally protected polymer composite structures and, more particularly, to methods for manufacturing thermally protected polymer composite structures.

### BACKGROUND

The development of lightweight and cost-effective high-temperature-resistant components, such as exhaust nozzles, is a significant challenge in various industries, including aerospace and automotive. Traditional metallic components, while robust and highly temperature-resistant, are not only heavy but also expensive to fabricate.

Polymer matrix composites (PMCs) present a promising solution due to their ease of manufacture and lower costs. However, their inherent limitations in high-temperature applications restrict their use in environments where thermal resistance is crucial. To overcome this, incorporating a thermal barrier layer can expand the operational temperature range of PMCs. Despite this potential, many existing thermal barriers are porous. While this porosity imparts thermal resistance to the barrier layer, it also complicates the manufacturing process. The complication arises because the matrix of the PMC, such as epoxy, causes migration into the porosity of the thermal barrier layer during the manufacturing process, which diminishes the thermal resistant property of the thermal barrier layer.

Accordingly, those skilled in the art continue with research and development efforts in the field of thermally protected polymer composite structures.

### SUMMARY

Disclosed are methods for manufacturing thermally protected polymer composite structure.

In one example, the disclosed method for manufacturing a thermally protected polymer composite structure utilizes a thermal barrier layer, which is porous and includes a tool-side surface and a non-tool-side surface opposed from the tool-side surface, and includes curing an adhesive onto the non-tool-side surface of the thermal barrier layer to yield a coated thermal barrier layer having a coated surface, and co-bonding (or joining) a polymer matrix composite material onto the coated surface of the coated thermal barrier layer.

The thermal barrier layer may comprise a thermal barrier reinforcement material and a thermal barrier matrix material. The thermal barrier reinforcement material may comprise at least one of glass, carbon, and quartz. The thermal barrier matrix material may comprise polyceramic resin. The thermal barrier layer may have a porosity ratio by volume of at least 1 percent, at least 10 percent, or at least 30 percent. The thermal barrier layer may have a thermal diffusivity of at most 0.0015 cm²/sec, at most 0.0025 cm²/sec, or at most 0.0035 cm²/sec. The adhesive may comprise a film adhesive. The adhesive may comprise bismaleimide. The curing of the adhesive may comprise bagging an assembly comprising the adhesive and the thermal barrier layer on a tool with a vacuum bag and drawing a vacuum with a vacuum pump. The curing of the adhesive may be performed under conditions that minimize migration of the adhesive into the thermal barrier layer. The adhesive may at least partially seal the non-tool-side surface of the thermal barrier layer. Sealing the non-tool-side surface of the thermal barrier layer with the adhesive may be used to yield the coated thermal barrier layer comprising the coated surface.

The curing of the adhesive may comprise subjecting the adhesive to a cure temperature during an adhesive curing cycle, wherein the cure temperature may comprise a first adhesive curing hold temperature for a first adhesive curing temperature hold time followed by a second adhesive curing hold temperature for a second adhesive curing temperature hold time, wherein the second adhesive curing hold temperature may be substantially greater than the first adhesive curing hold temperature. The second adhesive curing hold temperature may be at least 20 percent greater, at least 30 percent greater, or at least 40 percent greater than the first adhesive curing hold temperature. The first adhesive curing hold temperature and the first adhesive curing temperature hold time may be sufficient to achieve a degree of cure of at least 10 percent, at least 20 percent, at least 30 percent, at least 40 percent, or between 0 to 50 percent. The second adhesive curing hold temperature and the second adhesive curing temperature hold time may be sufficient to achieve a degree of cure of at least 70 percent, at least 80 percent, at least 90 percent, at least 95 percent, or between 70 and 99 percent. The curing of the adhesive may further comprise subjecting the adhesive to a cure pressure during the adhesive curing cycle, wherein the cure pressure may comprise a first adhesive curing hold pressure for a first adhesive curing pressure hold time followed by a second adhesive curing hold pressure for a second adhesive curing pressure hold time, wherein the second adhesive curing hold pressure may be substantially greater than the first adhesive curing hold pressure. The second adhesive curing hold pressure may be at least 5 times greater, at least 10 times greater, or at least 15 times greater than the first adhesive curing hold pressure. The first adhesive curing hold pressure may be between about 0 kPa and 104 kPa (0 psig and 15 psig). The first adhesive curing pressure hold time may be at most 240 minutes. The first adhesive curing pressure hold time may be between about 0 minutes and 240 minutes. The second adhesive curing hold pressure may be between about 206 kPa and 759 kPa (30 psig and 110 psig). The second adhesive curing pressure hold time may be at least 1 hour. The second adhesive curing pressure hold time may be between about 1 hour and 10 hours. The second adhesive curing pressure hold time may start as soon as the pressure reaches the second adhesive curing hold pressure. The second adhesive curing pressure hold time may begin after elapsion of at least about 25 percent of the first adhesive curing temperature hold time. The second adhesive curing temperature hold time may begin after a beginning of the second adhesive curing pressure hold time. The second adhesive curing pressure hold time may begin after elapsion of at least about 50 percent of the first adhesive curing temperature hold time. The second adhesive curing pressure hold time may begin after elapsion of the first adhesive curing temperature hold time.

The curing of the adhesive may be performed within an autoclave. The polymer matrix composite material may comprise a reinforcement material and a matrix material. The adhesive may substantially minimize migration of the matrix material of the polymer matrix composite material into the coated thermal barrier layer. The co-bonding of the polymer matrix composite material onto the coated surface may comprise placing a second adhesive between the polymer matrix composite material and the coated surface. The second adhesive may comprise a film adhesive. The second adhesive may comprise bismaleimide. The co-bonding of the polymer matrix composite material onto the coated surface may comprise bagging an assembly comprising the polymer matrix composite material and the coated thermal barrier layer on a tool with a vacuum bag and drawing a vacuum with a vacuum pump. The co-bonding of the polymer matrix composite material may be performed within an autoclave.

The thermal barrier layer may be provided by (1) positioning a thermal barrier material onto a work surface of a tool, and (2) curing the thermal barrier material on the tool, thereby yielding the thermal barrier layer which is porous and comprises a tool-side surface and a non-tool-side surface opposed from the tool-side surface. Through the step of curing the adhesive onto the non-tool-side surface of the thermal barrier layer to yield the coated thermal barrier layer, the coated thermal barrier layer may comprise the tool-side surface and the coated surface opposed from the tool-side surface. The thermal barrier material may comprise the thermal barrier reinforcement material and the thermal barrier matrix material, and the thermal barrier reinforcement material may comprise at least one of glass, carbon, and quarts, and the thermal barrier matrix material may comprise polyceramic resin. The curing of the adhesive may be performed at a first adhesive curing hold temperature followed by a second adhesive curing hold temperature to yield the coated thermal barrier layer, wherein the adhesive comprises at least one of polyimide and bismaleimide, and wherein the second adhesive curing hold temperature is about at least 20 percent greater than the first adhesive curing hold temperature. The polymer matrix composite material may comprise the reinforcement material and the matrix material.

In another example, the disclosed method for manufacturing a thermally protected polymer composite structure includes positioning a thermal barrier material onto a work surface of a tool; curing the thermal barrier material on the tool to yield a thermal barrier layer, wherein the thermal barrier layer is porous and comprises a tool-side surface and a non-tool-side surface opposed from the tool-side surface; curing an adhesive onto the non-tool-side surface of the thermal barrier layer to yield a coated thermal barrier layer comprising the tool-side surface and a coated surface opposed from the tool-side surface; and co-bonding a polymer matrix composite material onto the coated surface of the coated thermal barrier layer.

The method may further comprise positioning a release layer between the thermal barrier material and the work surface prior to the curing the thermal barrier material on the tool. The release layer may comprise a fluoropolymer. The curing of the thermal barrier material may comprise curing the thermal barrier material to achieve a degree of cure of at least 30 percent, at least 50 percent, or at least 70 percent.

In yet another example, the disclosed method for manufacturing a thermally protected polymer composite structure includes positioning a thermal barrier material onto a work surface of a tool, wherein the thermal barrier material comprises a thermal barrier reinforcement material and a thermal barrier matrix material, wherein the thermal barrier reinforcement material comprises at least one of glass, carbon, and quartz, wherein the thermal barrier matrix material comprises polyceramic resin; curing the thermal barrier material on the tool to yield a thermal barrier layer, wherein the thermal barrier layer is porous and comprises a tool-side surface and a non-tool-side surface opposed from the tool-side surface; curing an adhesive onto the non-tool-side surface of the thermal barrier layer at a first curing hold temperature (or first adhesive curing hold temperature) followed by a second curing hold temperature (or second adhesive curing hold temperature) to yield a coated thermal barrier layer comprising the tool-side surface and a coated surface opposed from the tool-side surface, wherein the adhesive comprises at least one of polyimide and bismaleimide, wherein the second (adhesive) curing hold temperature is about at least 20 percent greater than the first (adhesive) curing hold temperature; and co-bonding a polymer matrix composite material onto the coated surface of the coated thermal barrier layer, wherein the polymer matrix composite material comprises a reinforcement material and a matrix material.

In yet another example, a thermally protected polymer composite structure is provided. The thermally protected polymer composite structure comprises a thermal barrier layer. The thermal barrier layer is porous and comprises a tool-side surface and a non-tool-side surface opposed from the tool-side surface. The structure further comprises an adhesive disposed onto the non-tool-side surface of the thermal barrier layer to yield a coated thermal barrier layer comprising a coated surface, and a polymer matrix composite material disposed onto the coated surface of the coated thermal barrier layer.

The adhesive may be cured onto the non-tool-side surface of the thermal barrier layer. The polymer matrix composite material may be co-bonded onto the coated surface of the coated thermal barrier layer.

In yet another example, a method for manufacturing a thermally protected polymer composite structure using a thermal barrier layer is provided, the thermal barrier layer being porous and comprising a tool-side surface and a non-tool-side surface opposed from the tool-side surface. The method comprises sealing the non-tool-side surface of the thermal barrier layer with an adhesive to yield a coated thermal barrier layer comprising a coated surface, and joining a polymer matrix composite material onto the coated surface of the coated thermal barrier layer.

Other examples of the disclosed methods for manufacturing thermally protected polymer composite structure will become apparent from the following detailed description, the accompanying drawings, and the appended claims.

### BRIEF DESCRIPTION OF THE DRAWINGS

Fig. 1A is a flow diagram depicting one example of the disclosed method for manufacturing thermally protected polymer composite structure;
Fig. 1B is a flow diagram depicting another example of the disclosed method for manufacturing thermally protected polymer composite structure;
Fig. 2 is a cross-sectional schematic view of a thermally protected polymer composite structure;
Fig 3 is a cross-sectional schematic view depicting curing a thermal barrier material;
Fig. 4A is a cross-sectional schematic view of a thermal barrier layer with reinforcement material;
Fig. 4B is a cross-sectional schematic view of a thermal barrier layer without reinforcement material;
Fig. 5A is a cross-sectional schematic view depicting curing an adhesive with a release layer;
Fig. 5B is a cross-sectional schematic view of a coated thermal barrier layer;
Fig. 6A is a cross-sectional schematic view depicting co-bonding a coated thermal barrier layer and a polymer matrix composite material without a second adhesive;
Fig. 6B is a cross-sectional schematic view depicting co-bonding a coated thermal barrier layer and a polymer matrix composite material with a second adhesive;
Fig. 7A is a graph showing one example of curing cycle with multiple curing hold temperatures and multiple curing hold pressures;
Fig. 7B is a graph showing one example of adhesive curing cycle with multiple curing hold temperatures and multiple curing hold pressures;
Fig. 7C is a graph showing one example of co-bonding cycle with multiple co-bonding hold temperatures and multiple curing hold pressures;
Fig. 8 is a schematic illustration of an autoclave encapsulating various steps of the disclosed method;
Fig. 9 is a schematic illustration depicting a possible migration direction;

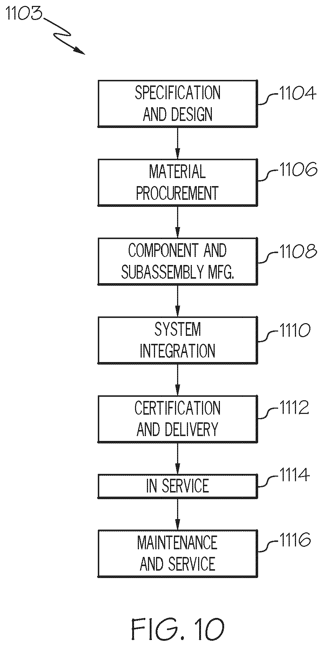

Fig. 10 is a block diagram of aircraft production and service methodology; and

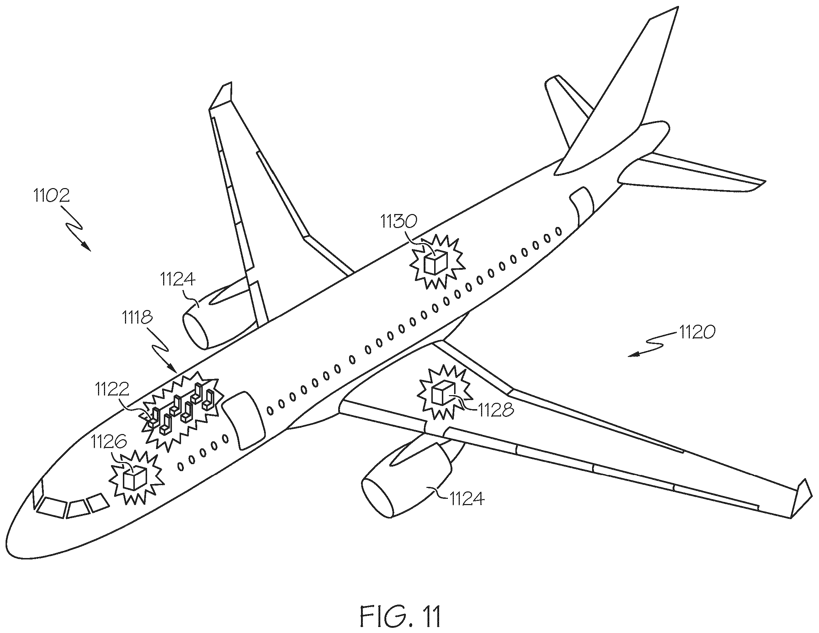

Fig. 11 is a schematic illustration of an aircraft.

### DETAILED DESCRIPTION

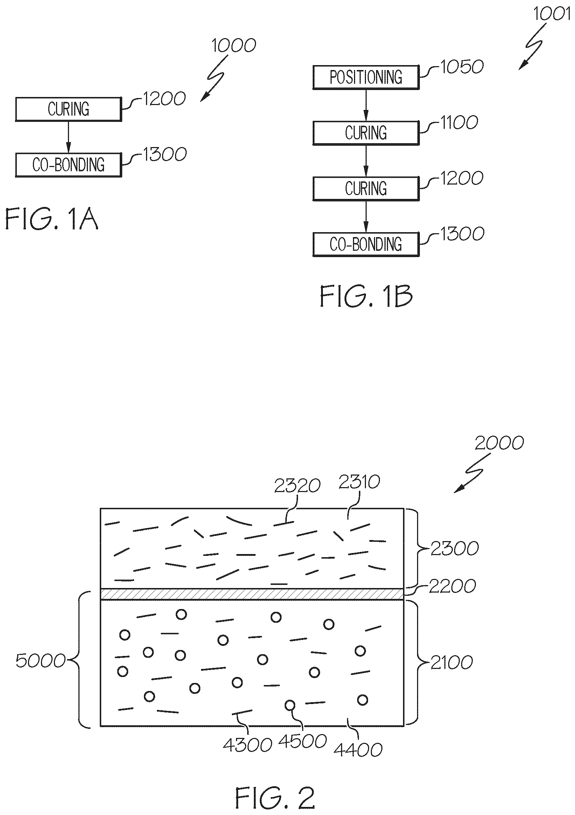

Referring to Fig. 1A, 2 and 3, one example of the disclosed method for manufacturing a thermally protected polymer composite structure, generally designated 1000, includes curing 1200 an adhesive 2200 on the non-tool-side surface 4200 of a thermal barrier layer 2100, which is opposed from a tool-side surface 4100 of a thermal barrier layer 2100, to yield a coated thermal barrier layer 5000 with a coated surface 5100 and co-bonding 1300 a polymer matrix composite material 2300 onto the coated surface 5100 of the coated thermal barrier layer 5000.

Another example of the disclosed method 1000 for manufacturing a thermally protected polymer composite structure 2000 using a thermal barrier layer 2100 that is porous and has a tool-side surface 4100 and a non-tool-side surface 4200 opposed from the tool-side surface 4100 may include sealing the non-tool-side surface 4200 of the thermal barrier layer 2100 with an adhesive 2200 to yield a coated thermal barrier layer 5000 having a coated surface 5100 and joining a polymer matrix composite material 2300 onto the coated surface 5100 of the coated thermal barrier layer 5000.

As shown in Fig 1B, the disclosed method 1001 may further include preparation steps including, but not limited to positioning a thermal barrier material 3100 onto a work surface 3400 of a tool 3050 and curing 1100 the thermal barrier material 3100 to yield a thermal barrier layer.

Polymer matrix composites (PMCs) offer many advantages in the aerospace industry, including cost-effectiveness and ease of manufacturing. However, their low tolerance to high-temperature environments limits their use in such conditions. One way to overcome this limitation is to introduce a thermal barrier layer that substantially mitigates heat transfer from the heat source to the PMC.

Those skilled in the art may choose a proper thermal diffusivity of the thermal barrier layer 2100. The proper thermal diffusivity value may vary depending on a given project. In one example, the thermal barrier layer 2100 may have a thermal diffusivity of at most 0.0015 cm²/sec. In another example, the thermal barrier layer 2100 may have a thermal diffusivity of at most 0.0025 cm²/sec. In another example, the thermal barrier layer 2100 may have a thermal diffusivity of at most 0.0035 cm²/sec. In another example, the thermal barrier layer 2100 may have a thermal diffusivity of at most 0.0045 cm²/sec. In another example, the thermal barrier layer 2100 may have a thermal diffusivity of at most 0.0075 cm²/sec. In another example, the thermal barrier layer 2100 may have a thermal diffusivity of at most 0.0095 cm²/sec. In another example, the thermal barrier layer 2100 may have a thermal diffusivity of at most 0.01 cm²/sec. In another example, the thermal barrier layer 2100 may have a thermal diffusivity of at most 0.02 cm²/sec.

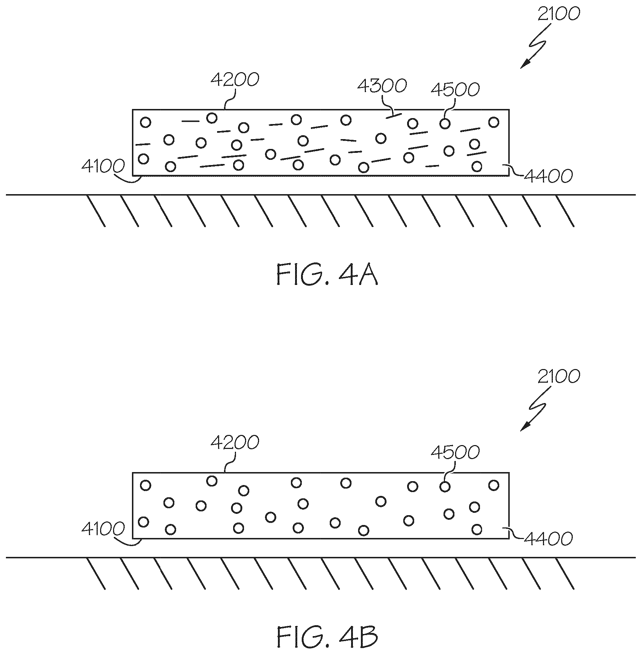

Referring to Fig. 2 and 4A, in one example, a thermal barrier layer 2100 may include a thermal barrier reinforcement material 4300, a thermal barrier matrix material 4400, and a porosity 4500. Those skilled in the art may choose a proper thermal barrier reinforcement material 4300 and a proper thermal barrier matrix material 4400 depending on a project. The thermal barrier reinforcement material 4300 may take various forms and may be made from various materials, including but not limited to carbon, quartz, glass, and aramid. The thermal barrier matrix material 4400 may also vary and may include, but is not limited to, thermoset resin, aerogel, and the like. Thermoset resin may include, but is not limited to, epoxy, polyceramic resin, and the like. Aerogel may include, but is not limited to, carbon aerogels, alumina aerogels, and the like. The combination of the thermal barrier reinforcement material 4300, the thermal barrier matrix material 4400, and the porosity 4500 may provide the desired structural and mechanical properties of the thermal barrier layer 2100. In another example shown in Fig. 4B, a thermal barrier layer 2100 may include a thermal barrier matrix material 4400 and a porosity 4500 without any thermal barrier reinforcement material 4300. The combination of the thermal barrier matrix material 4400 and the porosity 4500 may provide the desired structural and mechanical properties of the thermal barrier layer 2100. Exemplary products that are available in the market may include, but are not limited to, RM6001, "Firewalker," manufactured by Renegade Materials Corporation, headquartered at 3363 South Tech Blvd, Miamisburg, OH 45342.

The porosity 4500 of the thermal barrier layer 2100 may be the key feature of the thermal barrier layer 2100 that may provide the thermal resistant property. In other words, it is desirable to retain as much porosity 4500 as possible. The amount of porosity 4500 may be directly correlated to the thermal protection that the thermal barrier layer can provide.

Those skilled in the art may choose a proper porosity value depending on a required thermal diffusivity of a given project. In one example, the thermal barrier layer 2100 may have a porosity 4500 ratio, by volume, of at least 1 percent. In another example, the thermal barrier layer 2100 may have a porosity 4500 ratio, by volume, of at least 5 percent. In another example, the thermal barrier layer 2100 may have a porosity 4500 ratio, by volume, of at least 10 percent. In another example, the thermal barrier layer 2100 may have a porosity 4500 ratio, by volume, of at least 20 percent. In another example, the thermal barrier layer 2100 may have a porosity 4500 ratio, by volume, of at least 30 percent. In another example, the thermal barrier layer 2100 may have a porosity 4500 ratio, by volume, of at least 40 percent. In another example, the thermal barrier layer 2100 may have a porosity 4500 ratio, by volume, of at least 50 percent. In another example, the thermal barrier layer 2100 may have a porosity 4500 ratio, by volume, of at least 60 percent. In another example, the thermal barrier layer 2100 may have a porosity 4500 ratio, by volume, of at least 70 percent.

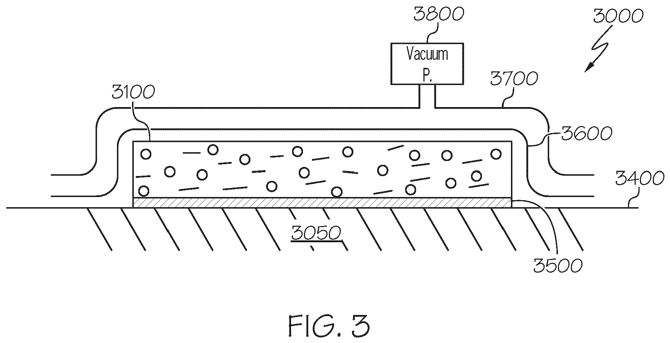

Referring to Figs. 1A, 1B, and 3, the disclosed method 1001 may begin with a thermal barrier material 3100 in an uncured form, in which case additional steps may be required including, but not limited to positioning 1050 on a work surface 3400 of a tool 3050 and curing 1100, before curing 1200 and co-bonding 1300 steps of the disclosed method 1000. These additional steps, such as positioning 1050 and curing 1100, in relation to the disclosed method 1000 are illustrated in a method 1001 shown in Fig. 1B. One example of a curing system 3000 of the curing 1100 is illustrated in Fig. 3.

Referring to Figs. 3 and 4A, positioning 1050 and curing 1100 a thermal barrier material 3100 may yield a thermal barrier layer 2100. Those skilled in the art may choose to use a release layer 3500 between the thermal barrier material 3100 and the work surface 3400 of the tool 3050 prior to the curing 1100 the thermal barrier material 3100 on the tool 3050. The release layer 3500 may be made from various materials including, but not limited to fluoropolymerbased coating such as polytetrafluoroethylene.

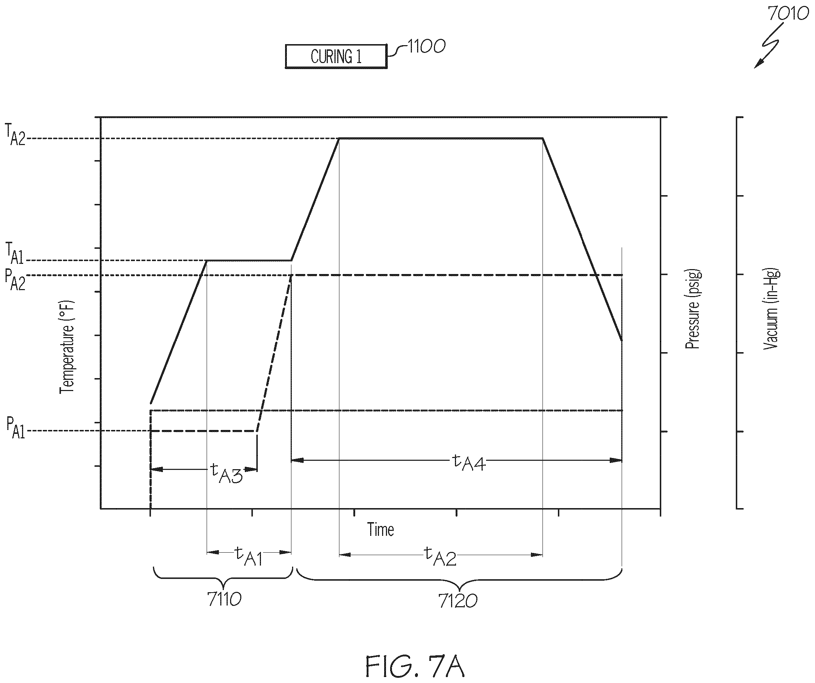

Referring to Figs. 3 and 7A, curing 1100 a thermal barrier material 3100 may be at least partly performed in a vacuum environment. The vacuum environment may be achieved by a vacuum pump 3800 and a vacuum bag 3700 that encapsulates an assembly of the release layer 3500 and the thermal barrier material 3100 on the work surface 3400 of the tool 3050. In addition to the vacuum bag 3700, a release film 3600 may be positioned between the vacuum bag 3700 and the assembly of the release layer 3500 and the thermal barrier material 3100 on the work surface 3400 of the tool 3050. In one example, the vacuum environment may be held for an entirety of a curing cycle 7010. In another example, the vacuum environment may be maintained only for a part of a curing cycle 7010.

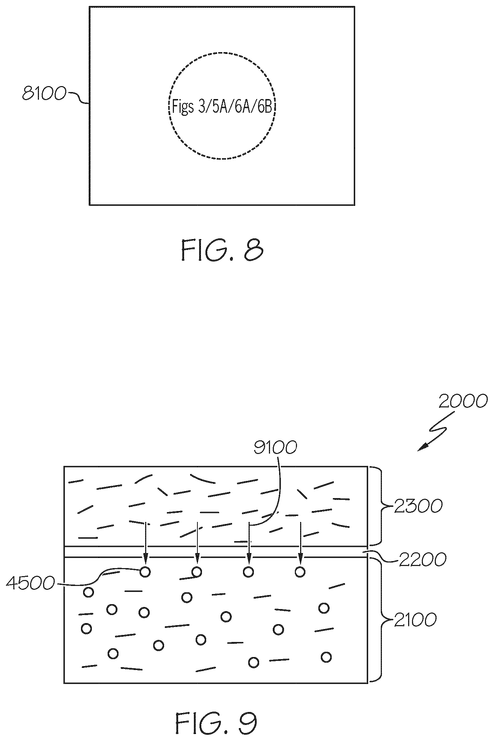

Still referring to Figs. 3 and 7A, in one example of the curing cycle 7010 may involve one curing hold temperature and one curing hold pressure. In another example of the curing cycle 7010 may involve more than one curing hold temperature T_{A1}, T_{A2} and more than one curing hold pressure P_{A1}, P_{A2}. Those skilled in the art may choose appropriate number of the curing hold temperatures and curing hold pressures, values of the curing hold temperatures T_{A1}, T_{A2} and curing hold pressures P_{A1}, P_{A2}, and the curing hold times t_{A1}, t_{A2}, t_{A3}, t_{A4} of the curing hold temperatures and the curing hold pressures depending on a given project and its specifications. Referring to Fig. 8, the temperature is controlled by an autoclave 8100 as which encapsulates the at least part of the curing 1100 apparatus.

Initial curing phase 7110 parameters, which may include, but not limited to the first curing hold temperature T_{A1}, the first curing hold time t_{A1}, the first curing hold pressure P_{A1}, and the third curing hold time t_{A3}, may be chosen to achieve a certain degree of cure of the thermal barrier material 3100 before proceeding to subsequent curing phase 7120 with the second curing hold temperature T_{A2}, the second curing hold time t_{A2}, the second curing hold pressure P_{A2}, and the fourth curing hold time t_{A4}. In one example, the degree of cure at the end of the initial curing phase 7110 may be at least 1 percent. In another example, the degree of cure at the end of the initial curing phase 7110 may be at least 5 percent. In another example, the degree of cure at the end of the initial curing phase 7110 may be at least 10 percent. In another example, the degree of cure at the end of the initial curing phase 7110 may be at least 20 percent. In another example, the degree of cure at the end of the initial curing phase 7110 may be at least 30 percent. In another example, the degree of cure at the end of the initial curing phase 7110 may be at least 40 percent. In another example, the degree of cure at the end of the initial curing phase 7110 may be at least 50 percent.

Subsequent curing phase 7120 parameters, which may include, but not limited to the second curing hold temperature T_{A2}, the second curing hold time t_{A2}, the second curing hold pressure P_{A2}, and the fourth curing hold time t_{A4}, may be chosen to achieve a certain degree of cure of the thermal barrier material 3100 before proceeding to curing 1200 of the disclosed method 1000, 1001. The degree of cure required for a given project at the end of the curing cycle 7010 may vary depending on the thermal barrier material 3100 used during curing 1100 to yield a thermal barrier layer 2100 that is workable and sealable. In order for the thermal barrier layer 2100 to be workable and sealable before curing 1200, it may need to have a degree of cure of between about 20 percent and about 50 percent. If a provided thermal barrier material 3100 has workable and sealable properties of a thermal barrier layer 2100, curing 1100 may be entirely skipped.

In one example, the degree of cure at the end of the curing cycle 7010 (Fig. 7A) may be at least 20 percent. In another example, the degree of cure at the end of the curing cycle 7010 may be at least 30 percent. In another example, the degree of cure at the end of the curing cycle 7010 may be at least 40 percent. In another example, the degree of cure at the end of the curing cycle 7010 may be at least 50 percent. In another example, the degree of cure at the end of the curing cycle 7010 may be at least 60 percent.

In one iteration of the curing cycle 7010 with multiple curing hold temperatures and multiple curing hold pressures, the curing 1100 may involve two curing hold temperatures T_{A1}, T_{A2}, two curing hold pressures P_{A1}, P_{A2}, and curing hold times t_{A1}, t_{A2}, t_{A3}, t_{A4} as shown in Fig 7A. In another iteration of the curing cycle 7010 with multiple curing hold temperatures and multiple curing hold pressures, the curing 1100 may involve two curing hold temperatures T_{A1}, T_{A2}, one curing hold pressure P_{A1}, and curing hold times t_{A1}, t_{A2}, t_{A3}. In another iteration of the curing cycle 7010 with multiple curing hold temperatures and multiple curing pressures, the curing 1100 may involve one curing hold temperature T_{A1}, two curing hold pressures P_{A1}, P_{A2}, and curing hold times t_{A1}, t_{A3}, t_{A4}. In another iteration of the curing cycle 7010 with multiple curing hold temperatures and multiple curing pressures may further include more than two curing hold temperatures and more than two curing hold pressures.

Referring to Fig. 7A, the second curing hold time T_{A2} may be substantially greater than the first curing hold temperature T_{A1}. In one example, the second curing hold temperature T_{A2} is at least 10 percent greater than the first curing hold temperature T_{A1}. In another example, the second curing hold temperature T_{A2} is at least 20 percent greater than the first curing hold temperature T_{A1}. In another example, the second curing hold temperature T_{A2} is at least 30 percent greater than the first curing hold temperature T_{A1}. In another example, the second curing hold temperature T_{A2} is at least 40 percent greater than the first curing hold temperature T_{A1}. In another example, the second curing hold temperature T_{A2} is at least 50 percent greater than the first curing hold temperature T_{A1}. In another example, the second curing hold temperature T_{A2} is at least 60 percent greater than the first curing hold temperature T_{A1}. In another example, the second curing hold temperature T_{A2} is at least 80 percent greater than the first curing hold temperature T_{A1}. In another example, the second curing hold temperature T_{A2} is at least 100 percent greater than the first curing hold temperature T_{A1}.

It may be beneficial to use multiple hold temperatures and multiple hold pressures during the curing 1100. Doing so may provide better porosity 4500 retention after curing 1100. If an uncured thermal barrier material 3100 is exposed to a higher temperature and a higher pressure from the start without a lower temperature and a lower pressure stage, it may collapse the porosity 4500. This is not desirable, as the porosity 4500 is what provides the desirable thermal protective property of a thermal barrier layer 2100.

Still referring to Fig. 7A, by exposing a thermal barrier material 3100 to a first curing hold temperature T_{A1} and a first curing hold pressure P_{A1} before increasing to a second curing hold temperature T_{A2} and a second curing hold pressure P_{A2}, the thermal barrier material 3100 has time to increase its viscosity and rigidity before getting exposed to higher pressure where there is a possibility of collapsing the porosity 4500 without certain amount of viscosity and rigidity. A degree of cure before proceeding to the second hold may be determined by those skilled in the art depending on a given project. Generally, a degree of cure is determined by several factors, including but not limited to temperature, pressure, presence of vacuum, and time exposed to these conditions.

In one example, the first curing hold temperature T_{A1} may be set to about 38 °C (100 °F). In another example, the first curing hold temperature T_{A1} may be set to about 49 °C (120 °F). In another example, the first curing hold temperature T_{A1} may be set to about 60 °C (140 °F). In another example, the first curing hold temperature T_{A1} may be set to about 71 °C (160 °F). In another example, the first curing hold temperature T_{A1} may be set to about 82 °C (180 °F). In another example, the first curing hold temperature T_{A1} may be set to about 93 °C (200 °F). In another example, the first curing hold temperature T_{A1} may be set to about 104 °C (220 °F). In another example, the first curing hold temperature T_{A1} may be set to about 116 °C (240 °F). In another example, the first curing hold temperature T_{A1} may be set to about 127 °C (260 °F). In another example, the first curing hold temperature T_{A1} may be set to about 138 °C (280 °F). In another example, the first curing hold temperature T_{A1} may be set to about 149 °C (300 °F). In another example, the first curing hold temperature T_{A1} may be set to about 177 °C (350 °F).

The first curing hold temperature T_{A1} may be held for a first curing hold time t_{A1}. In one example, the first curing hold time t_{A1} may be set to at least 10 minutes. In another example, the first curing hold time t_{A1} may be set to at least 20 minutes. In another example, the first curing hold time t_{A1} may be set to at least 30 minutes. In another example, the first curing hold time t_{A1} may be set to at least 40 minutes. In another example, the first curing hold time t_{A1} may be set to at least 50 minutes. In another example, the first curing hold time t_{A1} may be set to at least 60 minutes. In another example, the first curing hold time t_{A1} may be set to at least 100 minutes. In another example, the first curing hold time t_{A1} may be set to at least 150 minutes. In another example, the first curing hold time t_{A1} may be set to at least 200 minutes.

In one example, the second curing hold temperature T_{A2} may be set to about 93 °C (200 °F). In another example, the second curing hold temperature T_{A2} may be set to at least 116 °C (240 °F). In another example, the second curing hold temperature T_{A2} may be set to at least 127 °C (260 °F). In another example, the second curing hold temperature T_{A2} may be set to at least 138 °C (280 °F). In another example, the second curing hold temperature T_{A2} may be set to at least 149 °C (300 °F). In another example, the second curing hold temperature T_{A2} may be set to at least 160 °C (320 °F). In another example, the second curing hold temperature T_{A2} may be set to at least 171 °C (340 °F). In another example, the second curing hold temperature T_{A2} may be set to at least 182 °C (360 °F). In another example, the second curing hold temperature T_{A2} may be set to at least 193 °C (380 °F). In another example, the second curing hold temperature T_{A2} may be set to at least 204 °C (400 °F). In another example, the second curing hold temperature T_{A2} may be set to at least 216 °C (420 °F). In another example, the second curing hold temperature T_{A2} may be set to at least 227 °C (440 °F). In another example, the second curing hold temperature T_{A2} may be set to at least 238 °C (460 °F). In another example, the second curing hold temperature T_{A2} may be set to at least 249 °C (480 °F). In another example, the second curing hold temperature T_{A2} may be set to at least 260 °C (500 °F).

The second curing hold temperature T_{A2} may be held for a second curing hold time t_{A2}. In one example, the second curing hold time t_{A2} may be set to at least 30 minutes. In another example, the second curing hold time t_{A2} may be set to at least 50 minutes. In another example, the second curing hold time t_{A2} may be set to at least 70 minutes. In another example, the second curing hold time t_{A2} may be set to at least 90 minutes. In another example, the second curing hold time t_{A2} may be set to at least 120 minutes. In another example, the second curing hold time t_{A2} may be set to at least 150 minutes. In another example, the second curing hold time t_{A2} may be set to at least 200 minutes. In another example, the second curing hold time t_{A2} may be set to at least 240 minutes. When a desired degree of cure is achieved after elapsion of second curing temperature hold time t_{A2}, the second curing hold temperature T_{A2} may decrease at a predetermined rate.

In one example, the first curing hold pressure P_{A1} may be held relatively consistent throughout the entire curing cycle 7010 without getting increased to the second curing hold pressure P_{A2}. In another example, the first curing hold pressure P_{A1} may be set to about 0 kPa (0 psig). In another example, the first curing hold pressure P_{A1} may be set to at least 13 kPa (2 psig). In another example, the first curing hold pressure P_{A1} may be set to at least 27 kPa (4 psig). In another example, the first curing hold pressure P_{A1} may be set to at least 41 kPa (6 psig). In another example, the first curing hold pressure P_{A1} may be set to at least 55 kPa (8 psig). In another example, the first curing hold pressure P_{A1} may be set to at least 68 kPa (10 psig). In another example, the first curing hold pressure P_{A1} may be set to at least 103 kPa (15 psig). In another example, the first curing hold pressure P_{A1} may be set to at least 137 kPa (20 psig). In another example, the first curing hold pressure P_{A1} may be set to at least 206 kPa (30 psig). In another example, the first curing hold pressure P_{A1} may be set to at least 344 kPa (50 psig). The examples of the first curing hold pressures P_{A1} may be held for a first curing pressure hold time t_{A3}, which may vary depending on a given project.

After elapsion of the first curing pressure hold time t_{A3}, the first curing hold pressure P_{A1} may increase to a second curing hold pressure P_{A2} at a predetermined rate. In one example, the second curing hold pressure P_{A2} may be set to at least 344 kPa (50 psig). In another example, the second curing hold pressure P_{A2} may be set to at least 413 kPa (60 psig). In another example, the second curing hold pressure P_{A2} may be set to at least 482 kPa (70 psig). In another example, the second curing hold pressure P_{A2} may be set to at least 551 kPa (80 psig). In another example, the second curing hold pressure P_{A2} may be set to at least 620 kPa (90 psig). In another example, the second curing hold pressure P_{A2} may be set to at least 689 kPa (100 psig). In another example, the second curing hold pressure P_{A2} may be set to at least 758 kPa (110 psig). In another example, the second curing hold pressure P_{A2} may be set to at least 827 kPa (120 psig). In another example, the second curing hold pressure P_{A2} may be set to at least 896 kPa (130 psig). In another example, the second curing hold pressure P_{A2} may be set to at least 965 kPa (140 psig). In another example, the second curing hold pressure P_{A2} may be set to at least 1034 kPa (150 psig). The examples of the second curing hold pressures P_{A2} may be held for a second curing pressure hold time t_{A4}, which may vary depending on a given project.

Still referring to Fig. 7A, the second curing pressure hold time t_{A4} may start at various points of the curing cycle 7010. In one example, the second curing pressure hold time t_{A4} may begin after elapsion of at least about 20 percent of the first curing temperature hold time t_{A1}. In another example, the second curing pressure hold time t_{A4} may begin after elapsion of at least about 30 percent of the first curing temperature hold time t_{A1}. In another example, the second curing pressure hold time t_{A4} may begin after elapsion of at least about 40 percent of the first curing temperature hold time t_{A1}. In another example, the second curing pressure hold time t_{A4} may begin after elapsion of at least about 50 percent of the first curing temperature hold time t_{A1}. In another example, the second curing pressure hold time t_{A4} may begin after elapsion of at least about 60 percent of the first curing temperature hold time t_{A1}. In another example, the second curing pressure hold time t_{A4} may begin after elapsion of at least about 70 percent of the first curing temperature hold time t_{A1}. In another example, the second curing pressure hold time t_{A4} may begin after elapsion of at least about 80 percent of the first curing temperature hold time t_{A1}. In another example, the second curing pressure hold time t_{A4} may begin after elapsion of at least about 90 percent of the first curing temperature hold time t_{A1}. In another example, the second curing pressure hold time t_{A4} may begin after elapsion of at least about 99 percent of the first curing temperature hold time t_{A1}.

Referring back to Fig. 2, introducing a thermal barrier layer 2100 onto a polymer matrix composite material 2300 may pose a challenge during a co-bonding 1300. This is due to the fact that prepreg nature of the polymer matrix composite material 2300 allows migration 9100 (Fig. 9) of its matrix material 2310 from the polymer matrix composite material 2300 to the thermal barrier layer 2100 during co-bonding 1300. To ensure a proper joining, co-bonding 1300 the thermal barrier layer 2100 onto a polymer matrix composite material 2300 may require significantly high temperature and high pressure. This high temperature and high pressure condition may cause increased migration 9100 of matrix material.

The polymer matrix composite material 2300 may include various combination of a matrix material 2310 and a reinforcement material 2320. In one example, a matrix material 2310 may be (or may include) various types of thermoset resins, including but not limited to epoxy, cyanate ester, polyimide, and bismaleimide. A reinforcement material 2320 may be carbon fiber or any other material that may provide desired properties to the polymer matrix composite material 2300. In the current example, co-bonding 1300 a thermal barrier layer 2100 onto a polymer matrix composite material 2300 may cause migration 9100 of bismaleimide resin from the polymer matrix composite material 2300 to the thermal barrier layer 2100, as shown in Fig. 9. This migration 9100 may reduce the porosity 4500 of the thermal barrier layer 2100 by filling the porosity 4500.

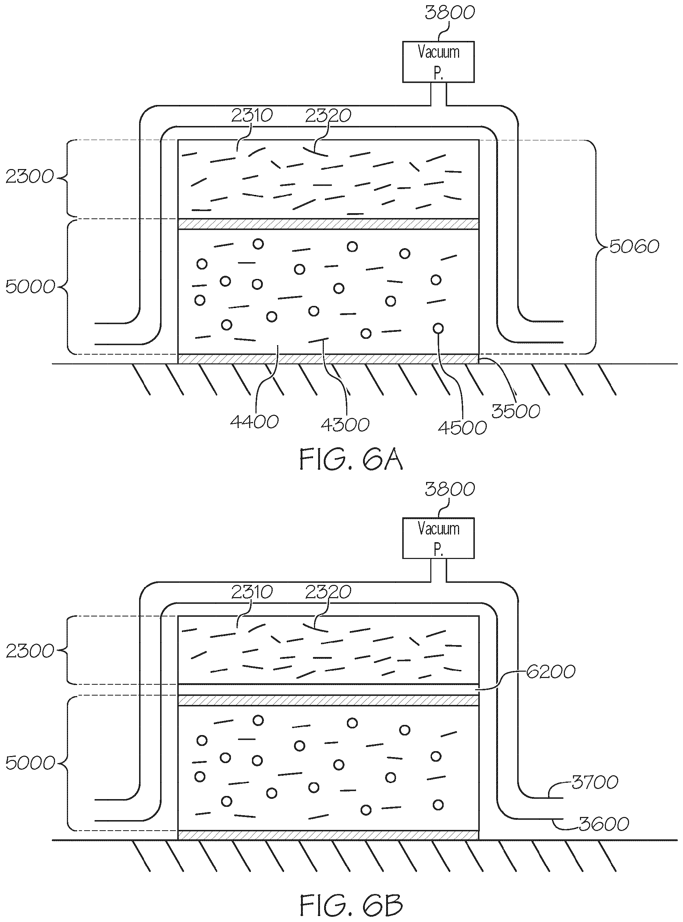

What causes this migration 9100 during co-bonding 1300 may be the viscous nature of the matrix material 2310 of the prepreg in combination with the high temperatures and high pressures. Thus, it is desirable for those skilled in the art to integrate conditions to minimize this migration 9100. As shown in Fig. 2, 6A, and 6B, one of the conditions to minimize this migration is by implementing an adhesive 2200 acting as a barrier between a thermal barrier layer 2100 and a polymer matrix composite material 2300. In addition to acting as a barrier that minimize migration 9100, the adhesive 2200 may also act as a bonding agent that provides substantial bonding between a thermal barrier layer 2100 and a polymer matrix composite material 2300.

An adhesive 2200 may at least partially seal the non-tool-side surface 4200 of the thermal barrier layer 2100. When compared to co-bonding 1300 a thermal barrier layer 2100 onto a polymer matrix composite material 2300 without an adhesive 2200, introduction of an adhesive 2200 may provide substantial reduction in migration 9100 of a matrix material 2310 of the polymer matrix composite material 2300. In one example, an adhesive 2200 may reduce the migration 9100 by at least 10 percent. In another example, an adhesive 2200 may reduce the migration 9100 by at least 20 percent. In another example, an adhesive 2200 may reduce the migration 9100 by at least 30 percent. In another example, an adhesive 2200 may reduce the migration 9100 by at least 40 percent. In another example, an adhesive 2200 may reduce the migration 9100 by at least 50 percent. In another example, an adhesive 2200 may reduce the migration 9100 by at least 60 percent. In another example, an adhesive 2200 may reduce the migration 9100 by at least 70 percent. In another example, an adhesive 2200 may reduce the migration 9100 by at least 80 percent. In another example, an adhesive 2200 may reduce the migration 9100 by at least 90 percent. In another example, an adhesive 2200 may reduce the migration 9100 by at least 95 percent. In another example, an adhesive 2200 may reduce the migration 9100 by about 99 percent.

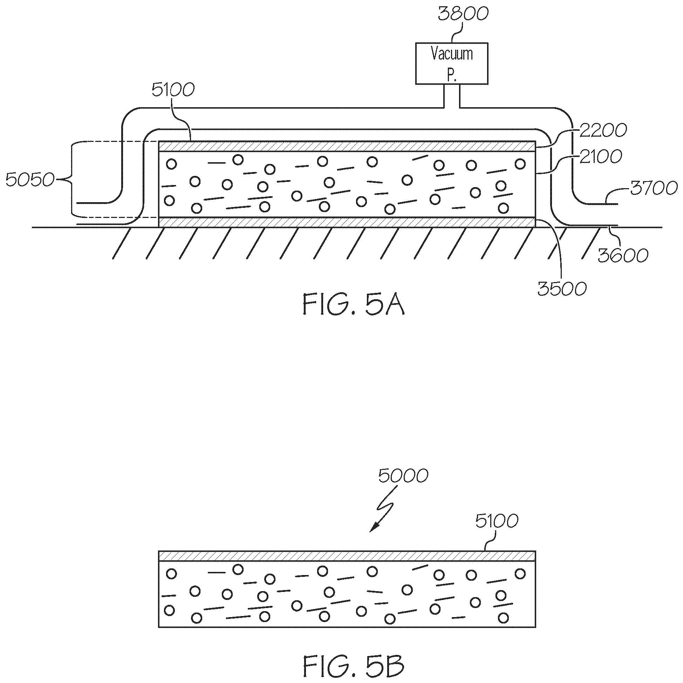

In order to protect a thermal barrier layer 2100 from migration 9100, it is desirable to perform a curing 1200 an adhesive 2200 onto the thermal barrier layer 2100 before proceeding to co-bonding 1300 of a polymer matrix composite material 2300 onto the thermal barrier layer 2100. One example of the curing 1200 is illustrated in Fig. 5A. As shown in Fig. 5A and similar to curing 1100, those skilled in the art may choose to use a release layer 3500 between the thermal barrier material 3100 and the work surface 3400 of the tool 3050 for easier release of a coated thermal barrier layer 5000 (Fig. 5B) after the curing 1200. The release layer 3500 may be made from various materials including, but not limited to fluoropolymer coating such as polytetrafluoroethylene. Any material that can provide easier release of a coated thermal barrier layer 5000 after curing 1200 may be used as a release layer 3500.

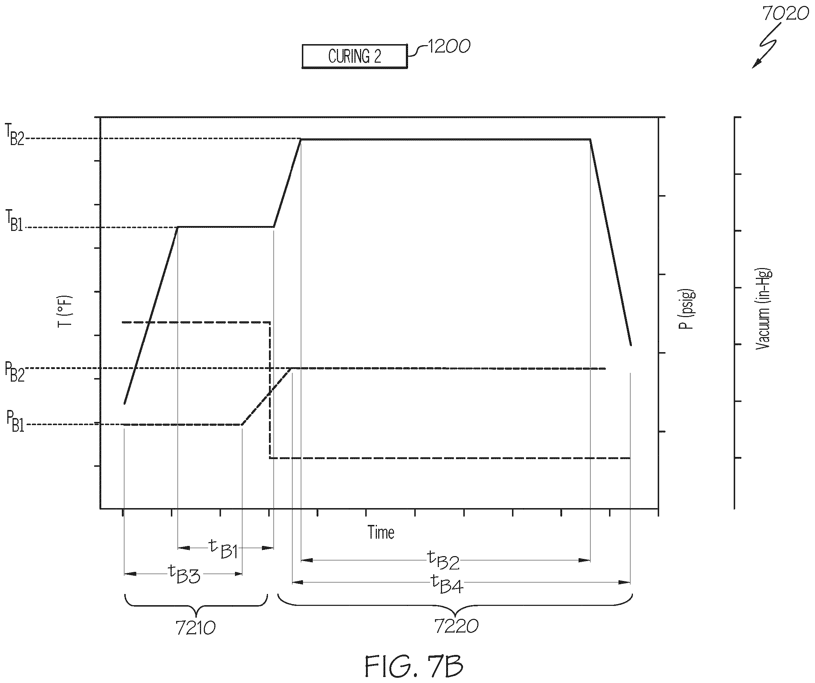

Referring to Figs. 5A and 7B, curing 1200 an adhesive 2200 onto the thermal barrier layer 2100 may be at least partly performed in a vacuum environment. The vacuum environment may be achieved by a vacuum pump 3800 and a vacuum bag 3700 that encapsulates an assembly of a release layer 3500, the thermal barrier material 3100, and the adhesive 2200 on a work surface 3400 of a tool 3050. In addition to the vacuum bag 3700, a release film 3600 may be positioned between the vacuum bag 3700 and the assembly of a release layer 3500, the thermal barrier material 3100, and the adhesive 2200. In one example, the vacuum environment may be held for an entirety of a adhesive curing cycle 7020. In another example, the vacuum may be vented at the start of the first adhesive curing pressure hold time t_{B3}. In another example, the vacuum may be vented after elapsion of at least about 1 percent of the first adhesive curing pressure hold time t_{B3}. In another example, the vacuum may be vented after elapsion of at least about 5 percent of the first adhesive curing pressure hold time t_{B3}. In another example, the vacuum may be vented after elapsion of at least about 10 percent of the first adhesive curing pressure hold time t_{B3}. In another example, the vacuum may be vented after elapsion of at least about 20 percent of the first adhesive curing pressure hold time t_{B3}. In another example, the vacuum may be vented after elapsion of at least about 30 percent of the first adhesive curing pressure hold time t_{B3}. In another example, the vacuum may be vented after elapsion of at least about 40 percent of the first adhesive curing pressure hold time t_{B3}. In another example, the vacuum may be vented after elapsion of at least about 50 percent of the first adhesive curing pressure hold time t_{B3}. In another example, the vacuum may be vented after elapsion of at least about 60 percent of the first adhesive curing pressure hold time t_{B3}. In another example, the vacuum may be vented after elapsion of at least about 80 percent of the first adhesive curing pressure hold time t_{B3}. In another example, the vacuum may be vented after elapsion of at least about 99 percent of the first adhesive curing pressure hold time t_{B3}.

In another example, the vacuum environment may be maintained only for a part of an adhesive curing cycle 7020. In another example, the vacuum may be maintained less than 5 percent of the duration of the adhesive curing cycle 7020. In another example, the vacuum may be maintained less than 10 percent of the duration of the adhesive curing cycle 7020. In another example, the vacuum may be maintained less than 20 percent of the duration of the adhesive curing cycle 7020. In another example, the vacuum may be maintained less than 30 percent of the duration of the adhesive curing cycle 7020. In another example, the vacuum may be maintained less than 40 percent of the duration of the adhesive curing cycle 7020. In another example, the vacuum may be maintained less than 50 percent of the duration of the adhesive curing cycle 7020.

In another example, the vacuum may be maintained at least 50 percent of the duration of the adhesive curing cycle 7020. In another example, the vacuum may be maintained at least 60 percent of the duration of the adhesive curing cycle 7020. In another example, the vacuum may be maintained at least 70 percent of the duration of the adhesive curing cycle 7020. In another example, the vacuum may be maintained at least 80 percent of the duration of the adhesive curing cycle 7020. In another example, the vacuum may be maintained at least 90 percent of the duration of the adhesive curing cycle 7020. In another example, the vacuum may be maintained at least 95 percent of the duration of the adhesive curing cycle 7020.

An adhesive 2200 may be supplied in various forms including, but not limited to a film adhesive before applied to a thermal barrier layer 2100 for curing 1200. An adhesive 2200 may be made from various thermoset resins including, but not limited to epoxy, cyanate ester, polyimide, and bismaleimide. One example of a film adhesive 2200 for use in the disclosed method is FM 450-1, which is commercially available from Syensqo, headquartered at Rue de la Fusée, 98, 1130 Brussels, Belgium. Depending on the thermoset resin used as an adhesive 2200, conditions of curing 1200 it onto a thermal barrier layer 2100, yielding a coated thermal barrier layer 5000, may vary. Those skilled in the art may choose an appropriate material and curing 1200 conditions depending on a given project. Factors that may affect the conditions of curing 1200 may include, but not limited to temperature, pressure, presence of vacuum, and exposure time.

By subjecting the adhesive 2200 to a cure temperature T (Fig. 7B) and a cure pressure P (Fig. 7B) during the adhesive curing cycle 7020, those skilled in the art may be able create a barrier that may minimize the migration 9100. Referring to Figs. 5A and 7B, in one example of the adhesive curing cycle 7020 may involve one adhesive curing hold temperature and one adhesive curing hold pressure. In another example of the adhesive curing cycle 7020 may involve more than one adhesive curing hold temperature T_{B1}, T_{B2} and more than one adhesive curing hold pressure P_{B1}, P_{B2}. Those skilled in the art may choose appropriate number of the adhesive curing hold temperatures and the adhesive curing hold pressures, values of the adhesive curing hold temperatures T_{B1}, T_{B2} and adhesive curing hold pressures P_{B1}, P_{B2}, and the adhesive curing hold times t_{B1}, t_{B2}, t_{B3}, t_{B4} of the adhesive curing hold temperatures and the adhesive curing hold pressures depending on a given project and its specifications. Referring to Fig. 8, the temperature is controlled by an autoclave 8100, which encapsulates at least part of the curing 1200 apparatus.

Still referring to Fig. 7B, initial adhesive curing phase 7210 values, which may include, but not limited to the first adhesive curing hold temperature T_{B1}, the first adhesive curing temperature hold time t_{B1}, the first adhesive curing hold pressure P_{B1}, and the first adhesive curing pressure hold time t_{B3}, may be chosen to achieve a certain degree of cure of the thermal barrier layer 2100 and the adhesive 2200 before proceeding to subsequent adhesive curing phase 7220 with the second adhesive curing hold temperature T_{B2}, the second adhesive curing temperature hold time t_{B2}, the second adhesive curing hold pressure P_{B2}, and the second adhesive curing pressure hold time t_{B4}. In one example, the degree of cure at the end of the initial adhesive curing phase 7210 may be at least 1 percent. In another example, the degree of cure at the end of the initial adhesive curing phase 7210 may be at least 5 percent. In another example, the degree of cure at the end of the initial adhesive curing phase 7210 may be at least 10 percent. In another example, the degree of cure at the end of the initial adhesive curing phase 7210 may be at least 20 percent. In another example, the degree of cure at the end of the initial adhesive curing phase 7210 may be at least 30 percent. In another example, the degree of cure at the end of the initial adhesive curing phase 7210 may be at least 40 percent. In another example, the degree of cure at the end of the initial adhesive curing phase 7210 may be at least 50 percent.

In another example, the first adhesive curing hold temperature T_{B1} and the first adhesive curing temperature hold time t_{B1} are sufficient to achieve a degree of cure of at least 10%. In another example, the first adhesive curing hold temperature T_{B1} and the first adhesive curing temperature hold time t_{B1} are sufficient to achieve a degree of cure of at least 20%. In another example, the first adhesive curing hold temperature T_{B1} and the first adhesive curing temperature hold time t_{B1} are sufficient to achieve a degree of cure of at least 30%. In another example, the first adhesive curing hold temperature T_{B1} and the first adhesive curing temperature hold time t_{B1} are sufficient to achieve a degree of cure of at least 40%. In another example, the first adhesive curing hold temperature T_{B1} and the first adhesive curing temperature hold time t_{B1} are sufficient to achieve a degree of cure of at least 50%.

Subsequent adhesive curing phase 7220 values, which may include, but not limited to the second adhesive curing hold temperature T_{B2}, the second adhesive curing hold time t_{A2}, the second adhesive curing hold pressure P_{B2}, and the fourth adhesive curing hold time t_{A4}, may be chosen to achieve a certain degree of cure of the thermal barrier layer 2100 and the adhesive 2200 before proceeding to co-bonding 1300 of the disclosed method 1000, 1001. The degree of cure required for a given project at the end of the adhesive curing cycle 7020 may vary depending on numerous factors. At the end of the adhesive curing cycle 7020, the coated thermal barrier layer 5000 may need to be cured to a degree of cure of between about 75 percent to about 99 percent.

In one example, at the end of the subsequent adhesive curing phase 7220, the coated thermal barrier layer 5000 may have a degree of cure of at least 65 percent. In another example, at the end of the subsequent adhesive curing cycle, the coated thermal barrier layer 5000 may have a degree of cure of at least 75 percent. In another example, at the end of the subsequent adhesive curing cycle, the coated thermal barrier layer 5000 may have a degree of cure of at least 85 percent. In another example, at the end of the subsequent adhesive curing cycle, the coated thermal barrier layer 5000 may have a degree of cure of at least 95 percent.

In another example, the second adhesive curing hold temperature T_{B2} and the second adhesive curing temperature hold time t_{B2} are sufficient to achieve a degree of cure of at least 50%. In another example, the second adhesive curing hold temperature T_{B2} and the second adhesive curing temperature hold time t_{B2} are sufficient to achieve a degree of cure of at least 60%. In another example, the second adhesive curing hold temperature T_{B2} and the second adhesive curing temperature hold time t_{B2} are sufficient to achieve a degree of cure of at least 70%. In another example, the second adhesive curing hold temperature T_{B2} and the second adhesive curing temperature hold time t_{B2} are sufficient to achieve a degree of cure of at least 80%. In another example, the second adhesive curing hold temperature T_{B2} and the second adhesive curing temperature hold time t_{B2} are sufficient to achieve a degree of cure of at least 90%. In another example, the second adhesive curing hold temperature T_{B2} and the second adhesive curing temperature hold time t_{B2} are sufficient to achieve a degree of cure of about 99%.

In one iteration of the adhesive curing cycle 7020 (Fig. 7B) with multiple adhesive curing hold temperatures and multiple adhesive curing hold pressures, the curing 1200 may involve two adhesive curing hold temperatures T_{B1}, T_{B2}, two adhesive curing pressures P_{B1}, P_{B2}, and adhesive curing hold times t_{B1}, t_{B2}, t_{B3}, t_{B4} as shown in Fig 7B. In another iteration of the adhesive curing cycle 7020, the curing 1200 may involve two adhesive curing hold temperatures T_{B1}, T_{B2}, one adhesive curing hold pressure P_{A1}, and adhesive curing hold times t_{A1}, t_{A2}, t_{A3}. In another iteration of the adhesive curing cycle 7020, the curing 1200 may involve one adhesive curing hold temperature T_{B1}, two adhesive curing hold pressures P_{B1}, P_{B2}, and adhesive curing hold times t_{B1}, t_{B3}, t_{B4}. In another iteration of the adhesive curing cycle 7020 with multiple curing hold temperatures and multiple curing pressures may further include more than two adhesive curing hold temperatures, more than two adhesive curing hold pressures, and their corresponding hold times for each hold temperature and hold pressure.

Referring to Fig. 7B, it is important to note that the second adhesive curing hold temperature T_{B2} may be substantially greater than the first adhesive curing hold temperature T_{B1.} In one example, the second adhesive curing hold temperature T_{B2} may be at least 10 percent greater than the first adhesive curing hold temperature T_{B1.} In another example, the second adhesive curing hold temperature T_{B2} may be at least 20 percent greater than the first adhesive curing hold temperature T_{B1.} In another example, the second adhesive curing hold temperature T_{B2} may be at least 30 percent greater than the first adhesive curing hold temperature T_{B1.} In another example, the second adhesive curing hold temperature T_{B2} may be at least 40 percent greater than the first adhesive curing hold temperature T_{B1.} In another example, the second adhesive curing hold temperature T_{B2} may be at least 50 percent greater than the first adhesive curing hold temperature T_{B1.} In another example, the second adhesive curing hold temperature T_{B2} may be at least 60 percent greater than the first adhesive curing hold temperature T_{B1.} In another example, the second adhesive curing hold temperature T_{B2} may be at least 70 percent greater than the first adhesive curing hold temperature T_{B1.} In another example, the second adhesive curing hold temperature T_{B2} may be at least 80 percent greater than the first adhesive curing hold temperature T_{B1.} In another example, the second adhesive curing hold temperature T_{B2} may be at least 90 percent greater than the first adhesive curing hold temperature T_{B1.} In another example, the second adhesive curing hold temperature T_{B2} may be at least 99 percent greater than the first adhesive curing hold temperature T_{B1.}

One of the advantages of using multiple hold temperatures and multiple hold pressures during the curing 1200 is that it may provide better porosity 4500 retention after curing 1200. Referring to Fig. 5A, if an assembly 5050 is exposed to a higher temperature and a higher pressure from the start without a lower temperature and a lower pressure stage, it may force a migration 9100 (Fig. 9) of adhesive 2200 into a porosity 4500 of a thermal barrier layer 2100 or collapse the porosity 4500 itself. This is not desirable, as the porosity 4500 is what provides the desirable thermal protective property of the thermal barrier layer 2100.

Still referring to Fig. 7B, by exposing an assembly 5050 to a first adhesive curing hold temperature T_{B1} and a first adhesive curing hold pressure P_{B1} before increasing to a second adhesive curing hold temperature T_{B2} and a second adhesive curing hold pressure P_{B2}, an adhesive 2200 has time to increase its viscosity and rigidity before getting exposed to higher pressure where the increased viscosity and rigidity condition may minimize migration 9100. A degree of cure of the adhesive 2200 before proceeding to the second hold may be determined by those skilled in the art depending on a given project. Generally, the degree of cure of the adhesive at the end of the first adhesive curing hold temperature T_{B1} is determined by several factors, including but not limited to temperature, pressure, presence of vacuum, and time exposed to these conditions.

In one example, the first adhesive curing hold temperature T_{B1} may be set to at least 38 °C (100 °F). In another example, the first adhesive curing hold temperature T_{B1} may be set to at least 66 °C (150 °F). In another example, the first adhesive curing hold temperature T_{B1} may be set to at least 93 °C (200 °F). In another example, the first adhesive curing hold temperature T_{B1} may be set to at least 104 °C (220 °F). In another example, the first adhesive curing hold temperature T_{B1} may be set to at least 116 °C (240 °F). In another example, the first adhesive curing hold temperature T_{B1} may be set to at least 127 °C (260 °F). In another example, the first adhesive curing hold temperature T_{B1} may be set to at least 138 °C (280 °F). In another example, the first adhesive curing hold temperature T_{B1} may be set to at least 149 °C (300 °F). In another example, the first adhesive curing hold temperature T_{B1} may be set to at least 160 °C (320 °F). In another example, the first adhesive curing hold temperature T_{B1} may be set to at least 171 °C (340 °F). In another example, the first adhesive curing hold temperature T_{B1} may be set to at least 182 °C (360 °F). In another example, the first adhesive curing hold temperature T_{B1} may be set to at least 193 °C (380 °F). In another example, the first adhesive curing hold temperature T_{B1} may be set to at least 204 °C (400 °F).

The first adhesive curing hold temperature T_{B1} may be held for a first adhesive curing hold time t_{A1}. In one example, the first adhesive curing temperature hold time t_{B1} may be set to at least 10 minutes. In another example, the first adhesive curing temperature hold time t_{B1} may be set to at least 20 minutes. In another example, the first adhesive curing temperature hold time t_{B1} may be set to at least 40 minutes. In another example, the first adhesive curing temperature hold time t_{B1} may be set to at least 60 minutes. In another example, the first adhesive curing temperature hold time t_{B1} may be set to at least 80 minutes. In another example, the first adhesive curing temperature hold time t_{B1} may be set to at least 100 minutes. In another example, the first adhesive curing temperature hold time t_{B1} may be set to at least 120 minutes. In another example, the first adhesive curing temperature hold time t_{B1} may be set to at least 140 minutes. In another example, the first adhesive curing temperature hold time t_{B1} may be set to at least 160 minutes. In another example, the first adhesive curing temperature hold time t_{B1} may be set to at least 180 minutes. In another example, the first adhesive curing temperature hold time t_{B1} may be set to at least 200 minutes. In another example, the first adhesive curing temperature hold time t_{B1} may be set to at least 250 minutes. In another example, the first adhesive curing temperature hold time t_{B1} may be set to at least 300 minutes.

In one example, the second adhesive curing hold temperature T_{B2} may be set to at least 66 °C (150 °F). In another example, the second adhesive curing hold temperature T_{B2} may be set to at least 93 °C (200 °F). In another example, the second adhesive curing hold temperature T_{B2} may be set to at least 121 °C (250 °F). In another example, the second adhesive curing hold temperature T_{B2} may be set to at least 149 °C (300 °F). In another example, the second adhesive curing hold temperature T_{B2} may be set to at least 160 °C (320 °F). In another example, the second adhesive curing hold temperature T_{B2} may be set to at least 171 °C (340 °F). In another example, the second adhesive curing hold temperature T_{B2} may be set to at least 182 °C (360 °F). In another example, the second adhesive curing hold temperature T_{B2} may be set to at least 193 °C (380 °F). In another example, the second adhesive curing hold temperature T_{B2} may be set to at least 204 °C (400 °F). In another example, the second adhesive curing hold temperature T_{B2} may be set to at least 216 °C (420 °F). In another example, the second adhesive curing hold temperature T_{B2} may be set to at least 227 °C (440 °F). In another example, the second adhesive curing hold temperature T_{B2} may be set to at least 243 °C (470 °F). In another example, the second adhesive curing hold temperature T_{B2} may be set to at least 260 °C (500 °F).

The second adhesive curing hold temperature T_{B2} may be held for a second adhesive curing hold time t_{B2}. In one example, the second adhesive curing temperature hold time t_{B2} may be set to at least 1 hour. In another example, the second adhesive curing temperature hold time t_{B2} may be set to at least 2 hours. In another example, the second adhesive curing temperature hold time t_{B2} may be set to at least 3 hours. In another example, the second adhesive curing temperature hold time t_{B2} may be set to at least 4 hours. In another example, the second adhesive curing temperature hold time t_{B2} may be set to at least 5 hours. In another example, the second adhesive curing temperature hold time t_{B2} may be set to at least 6 hours. In another example, the second adhesive curing temperature hold time t_{B2} may be set to at least 7 hours. In another example, the second adhesive curing temperature hold time t_{B2} may be set to at least 8 hours. In another example, the second adhesive curing temperature hold time t_{B2} may be set to at least 9 hours. In another example, the second adhesive curing temperature hold time t_{B2} may be set to at least 10 hours. In another example, the second adhesive curing temperature hold time t_{B2} may be set to at least 11 hours. In another example, the second adhesive curing temperature hold time t_{B2} may be set to at least 12 hours. In another example, the second adhesive curing temperature hold time t_{B2} may be set to at least 13 hours. In another example, the second adhesive curing temperature hold time t_{B2} may be set to at least 14 hours. In another example, the second adhesive curing temperature hold time t_{B2} may be set to at least 15 hours.

In one example, the first adhesive curing hold pressure P_{B1} may be held relatively consistent throughout the entire adhesive curing cycle 7020 without getting increased to the second adhesive curing hold pressure P_{B2}. In another example, the first adhesive curing hold pressure P_{B1} may be set to about 0 kPa (0 psig). In another example, the first adhesive curing hold pressure P_{B1} may be set to at least 34 kPa (5 psig). In another example, the first adhesive curing hold pressure P_{B1} may be set to at least 68 kPa (10 psig). In another example, the first adhesive curing hold pressure P_{B1} may be set to at least 137 kPa (20 psig). In another example, the first adhesive curing hold pressure P_{B1} may be set to at least 172 kPa (25 psig). In another example, the first adhesive curing hold pressure P_{B1} may be set to at least 206 kPa (30 psig). In another example, the first adhesive curing hold pressure P_{B1} may be set to at least 241 kPa (35 psig). In another example, the first adhesive curing hold pressure P_{B1} may be set to at least 275 kPa (40 psig). In another example, the first adhesive curing hold pressure P_{B1} may be set to at least 310 kPa (45 psig). In another example, the first adhesive curing hold pressure P_{B1} may be set to at least 344 kPa (50 psig). The examples of the first adhesive curing hold pressures P_{B1} may be held for a first adhesive curing pressure hold time t_{B3}, which may vary depending on a given project.

Still referring to Fig. 7B, after elapsion of the first adhesive curing pressure hold time t_{B3}, the first adhesive curing hold pressure P_{B1} may increase to a second adhesive curing hold pressure P_{B2} at a predetermined rate. In one example, the second adhesive curing hold pressure P_{B2} may be set to at least 137 kPa (20 psig). In another example, the second adhesive curing hold pressure P_{B2} may be set to at least 275 kPa (40 psig). In another example, the second adhesive curing hold pressure P_{B2} may be set to at least 413 kPa (60 psig). In another example, the second adhesive curing hold pressure P_{B2} may be set to at least 551 kPa (80 psig). In another example, the second adhesive curing hold pressure P_{B2} may be set to at least 689 kPa (100 psig). In another example, the second adhesive curing hold pressure P_{B2} may be set to at least 827 kPa (120 psig). In another example, the second adhesive curing hold pressure P_{B2} may be set to at least 1034 kPa (150 psig). The examples of the second adhesive curing hold pressures P_{B2} may be held for a second adhesive curing pressure hold time t_{B4}, which may vary depending on a given project. In other words, the second adhesive curing pressure hold time t_{B4} starts as soon as the curing pressure P reaches the second adhesive curing hold pressure P_{B2}.

Still referring to Fig. 7B, the second adhesive curing pressure hold time t_{B4} may start at various points of the adhesive curing cycle 7020. In one example, the second adhesive curing pressure hold time t_{B4} may begin after elapsion of at least about 20 percent of the first adhesive curing temperature hold time t_{B1}. In another example, the second adhesive curing pressure hold time t_{B4} may begin after elapsion of at least about 30 percent of the first adhesive curing temperature hold time t_{A1}. In another example, the second adhesive curing pressure hold time t_{B4} may begin after elapsion of at least about 40 percent of the first adhesive curing temperature hold time t_{A1}. In another example, the second adhesive curing pressure hold time t_{B4} may begin after elapsion of at least about 50 percent of the first adhesive curing temperature hold time t_{A1}. In another example, the second adhesive curing pressure hold time t_{B4} may begin after elapsion of at least about 60 percent of the first adhesive curing temperature hold time t_{A1}. In another example, the second adhesive curing pressure hold time t_{B4} may begin after elapsion of at least about 70 percent of the first adhesive curing temperature hold time t_{A1}. In another example, the second adhesive curing pressure hold time t_{B4} may begin after elapsion of at least about 80 percent of the first adhesive curing temperature hold time t_{A1}. In another example, the adhesive curing pressure hold time t_{B4} may begin after elapsion of at least about 90 percent of the first adhesive curing temperature hold time t_{A1}. In another example, the second adhesive curing pressure hold time t_{B4} may begin after elapsion of at least about 99 percent of the first adhesive curing temperature hold time t_{A1}. In another example, the second adhesive curing pressure hold time t_{B4} may begin at any point after elapsion of the first adhesive curing temperature hold time tAl.

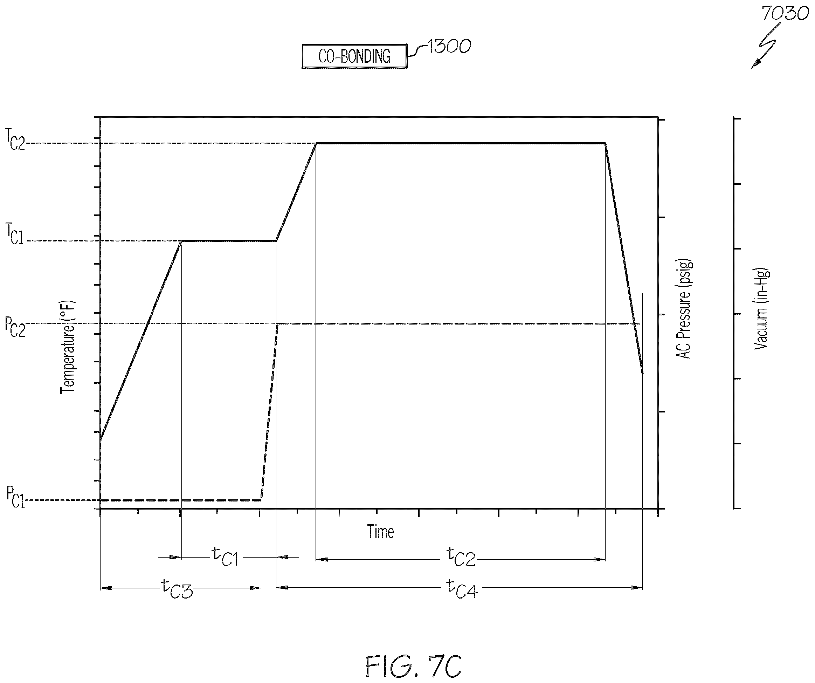

Referring back to Fig. 6A and 6B, after the curing 1200, which may yield a coated thermal barrier layer 5000 shown in Fig. 5B, the next step may involve co-bonding 1300 the polymer matrix composite material 2300 onto the coated surface 5100 of the coated thermal barrier layer 5000. Similar to previous steps, which may include curing 1100 of a thermal barrier material 3100 and curing 1200 of adhesive 2200 onto the thermal barrier layer 2100, an autoclave 8100 may be utilized to control the temperature aspect (Fig. 7C) of the co-bonding 1300 environment. Second adhesive 6200 may be placed between the polymer matrix composite material 2300 and the coated surface 5100.

Even though co-bonding 1300 a coated thermal barrier layer 5000 onto a polymer matrix composite material 2300 may already involves an adhesive 2200 as a migration barrier, it is still desirable to be cautious and take proper measures that may minimize migration 9100 during the co-bonding 1300. In other words, just like previous steps, which may include, but not limited to curing 1100 and curing 1200, co-bonding 1300 may involve more than one hold temperatures, more than one hold pressures, and hold times as shown in a co-bonding cycle 7030 (Fig. 7C).

Referring Fig. 6A, 6B and 7C, co-bonding 1300 a coated thermal barrier layer 5000 onto a polymer matrix composite material 2300 may be at least partly performed in a vacuum environment. The vacuum environment may be achieved by a vacuum pump 3800 and a vacuum bag 3700 that encapsulates an assembly of a release layer 3500, the thermal barrier material 3100, and the adhesive 2200 on a work surface 3400 of a tool 3050. In addition to the vacuum bag 3700, a release film 3600 may be positioned between the vacuum bag 3700 and the assembly of a release layer 3500, a coated thermal barrier layer 5000, a second adhesive 6200, and a polymer matrix composite material 2300. In one example, the vacuum environment may be held for an entirety of the co-bonding cycle 7030. In another example, the vacuum may be vented at about start of a first co-bonding pressure hold time t_{C3}. In another example, the vacuum may be vented after elapsion of at least about 1 percent of the first co-bonding pressure hold time t_{C3}. In another example, the vacuum may be vented after elapsion of at least about 5 percent of the first co-bonding pressure hold time t_{C3}. In another example, the vacuum may be vented after elapsion of at least about 10 percent of the first co-bonding pressure hold time t_{C3}. In another example, the vacuum may be vented after elapsion of at least about 20 percent of the first co-bonding pressure hold time t_{C3}. In another example, the vacuum may be vented after elapsion of at least about 30 percent of the first co-bonding pressure hold time t_{C3}. In another example, the vacuum may be vented after elapsion of at least about 40 percent of the first co-bonding pressure hold time t_{C3}. In another example, the vacuum may be vented after elapsion of at least about 50 percent of the first co-bonding pressure hold time t_{C3}. In another example, the vacuum may be vented after elapsion of at least about 60 percent of the first co-bonding pressure hold time t_{C3}. In another example, the vacuum may be vented after elapsion of at least about 80 percent of the first co-bonding pressure hold time t_{C3}. In another example, the vacuum may be vented after elapsion of at least about 99 percent of the first co-bonding pressure hold time t_{C3}.

In another example, the vacuum environment may be maintained only for a part of the co-bonding cycle 7030. In another example, the vacuum may be maintained less than 5 percent of the duration of the co-bonding cycle 7030. In another example, the vacuum may be maintained less than 10 percent of the duration of the co-bonding cycle 7030. In another example, the vacuum may be maintained less than 20 percent of the duration of the co-bonding cycle 7030. In another example, the vacuum may be maintained less than 30 percent of the duration of the co-bonding cycle 7030. In another example, the vacuum may be maintained less than 40 percent of the duration of the co-bonding cycle 7030. In another example, the vacuum may be maintained less than 50 percent of the duration of the co-bonding cycle 7030.

In another example, the vacuum may be maintained at least 50 percent of the duration of the co-bonding cycle 7030. In another example, the vacuum may be maintained at least 60 percent of the duration of the co-bonding cycle 7030. In another example, the vacuum may be maintained at least 70 percent of the duration of the co-bonding cycle 7030. In another example, the vacuum may be maintained at least 80 percent of the duration of the co-bonding cycle 7030. In another example, the vacuum may be maintained at least 90 percent of the duration of the co-bonding cycle 7030. In another example, the vacuum may be maintained at least 95 percent of the duration of the co-bonding cycle 7030.

Still referring to Fig. 6B, the second adhesive 6200 may be supplied in various forms including, but not limited to a film adhesive before applied to a coated thermal barrier layer 5000 through co-bonding 1300. The second adhesive 6200 may include various thermoset resins including, but not limited to epoxy, cyanate ester, polyimide, and bismaleimide. One example of the second adhesive 6200 for use in the disclosed method may be FM 450-1 by Syensqo, headquartered at Rue de la Fusée, 98, 1130 Brussels, Belgium. Depending on the thermoset resin used as the second adhesive 6200, conditions of co-bonding 1300 it onto the coated thermal barrier layer 5000, yielding a thermally protected polymer composite structure 2000 (Fig. 2), may vary. Those skilled in the art may choose an appropriate material and co-bonding 1300 conditions depending on a given project. Factors that may affect the conditions of co-bonding 1300 may include, but not limited to temperature, pressure, presence of vacuum, and exposure time.

Referring to Figs. 6A, 6B and 7C, in one example of the co-bonding cycle 7030 may involve one co-bonding hold temperature and one co-bonding hold pressure. In another example of the co-bonding cycle 7030 may involve more than one co-bonding hold temperature T_{C1}, T_{C2} and more than one co-bonding hold pressure P_{C1}, P_{C2}. Those skilled in the art may choose appropriate number of the co-bonding hold temperatures and the co-bonding hold pressures, values of the co-bonding hold temperatures T_{C1}, T_{C2} and co-bonding hold pressures P_{C1}, P_{C2}, and the co-bonding hold times t_{C1}, t_{C2}, t_{C3}, t_{C4} of the co-bonding hold temperatures and the co-bonding hold pressures depending on a given project and its specifications.

Examples of the disclosure may be described in the context of an aircraft manufacturing and service method 1103, as shown in Fig. 6, and an aircraft 1102, as shown in Fig. 7. During pre-production, the aircraft manufacturing and service method 1103 may include specification and design 1104 of the aircraft 1102 and material procurement 1106. During production, component/subassembly manufacturing 1108 and system integration 1110 of the aircraft 1102 takes place. Thereafter, the aircraft 1102 may go through certification and delivery 1112 in order to be placed in service 1114. While in service by a customer, the aircraft 1102 is scheduled for routine maintenance and service 1116, which may also include modification, reconfiguration, refurbishment and the like.

Each of the processes of method 1103 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in Fig. 7, the aircraft 1102 produced by example method 1103 may include an airframe 1118 with a plurality of systems 1120 and an interior 1122. Examples of the plurality of systems 1120 may include one or more of a propulsion system 1124, an electrical system 1126, a hydraulic system 1128, and an environmental system 1130. Any number of other systems may be included.

The disclosed methods for manufacturing thermally protected polymer composite structures may be employed during any one or more of the stages of the aircraft manufacturing and service method 1103. As one example, components or subassemblies corresponding to component/subassembly manufacturing 1108, system integration 1110, and/or maintenance and service 1116 may be assembled using the disclosed methods for manufacturing thermally protected polymer composite structures. As another example, the airframe 1118 may be constructed using the disclosed methods for manufacturing thermally protected polymer composite structure. Also, one or more method examples may be utilized during component/subassembly manufacturing 1108 and/or system integration 1110, for example, by substantially expediting assembly of or reducing the cost of an aircraft 1102, such as the airframe 1118 and/or the interior 1122. Similarly, one or more method examples may be utilized while the aircraft 1102 is in service, for example and without limitation, to maintenance and service 1116.

Different examples of the disclosed methods for manufacturing thermally protected polymer composite structures include a variety of components, features, and functionalities. It should be understood that the various examples of the disclosed methods for manufacturing thermally protected polymer composite structures disclosed herein may include any of the components, features, and functionalities of any of the other examples of the disclosed methods for manufacturing thermally protected polymer composite structure, and all of such possibilities are intended to be within the scope of the present disclosure.

The disclosed methods for manufacturing thermally protected polymer composite structures are described in the context of aerospace vehicles. However, one of ordinary skill in the art will readily recognize that the disclosed methods for manufacturing thermally protected polymer composite structures are suitable for a variety of applications, and the present disclosure is not limited to aerospace applications. For example, the disclosed methods for manufacturing thermally protected polymer composite structures may be implemented in various types of vehicles including, for example, helicopters, passenger ships, automobiles, marine products (boat, motors, etc.) and the like. Non-vehicle applications are also contemplated.

Although the disclosed methods for manufacturing thermally protected polymer composite structures in an aerospace environment, it is contemplated that the disclosed methods for manufacturing thermally protected polymer composite structures may be implemented in any industry in accordance with the applicable industry standards. The specific method for manufacturing a thermally protected polymer composite structure can be selected and tailored depending upon the particular application.

Although various examples of the disclosed methods for manufacturing thermally protected polymer composite structure have been shown and described, modifications may occur to those skilled in the art upon reading the specification. The present application includes such modifications and is limited only by the scope of the claims.

The disclosure further comprises the following clauses:
1. A method (1000) for manufacturing a thermally protected polymer composite structure (2000) using a thermal barrier layer (2100), the thermal barrier layer (2100) being porous and comprising a tool-side surface (4100) and a non-tool-side surface (4200) opposed from the tool-side surface (4100), the method (1000) comprising:
   curing (1200) an adhesive (2200) onto the non-tool-side surface (4200) of the thermal barrier layer (2100) to yield a coated thermal barrier layer (5000) comprising a coated surface (5100); and
   co-bonding (1300) a polymer matrix composite material (2300) onto the coated surface (5100) of the coated thermal barrier layer (5000).
2. The method (1000) of Clause 1, wherein the thermal barrier layer (2100) comprises a thermal barrier reinforcement material (4300) and a thermal barrier matrix material (4400).
3. The method (1000) of Clause 2, wherein the thermal barrier reinforcement material (4300) comprises at least one of glass, carbon, and quartz.
4. The method (1000) of Clause 2 or 3, wherein the thermal barrier matrix material (4400) comprises polyceramic resin.
5. The method (1000) of any one of Clauses 1-4, wherein the thermal barrier layer (2100) has a porosity (4500) ratio by volume of at least 1 percent.
6. The method (1000) of any one of Clauses 1-5, wherein the thermal barrier layer (2100) has a porosity (4500) ratio by volume of at least 10 percent.
7. The method (1000) of any one of Clauses 1-6, wherein the thermal barrier layer (2100) has a porosity (4500) ratio by volume of at least 30 percent.
8. The method (1000) of any one of Clauses 1-7, wherein the thermal barrier layer (2100) has a thermal diffusivity of at most 0.0015 cm²/sec.
9. The method (1000) of any one of Clauses 1-8, wherein the thermal barrier layer (2100) has a thermal diffusivity of at most 0.0025 cm²/sec.
10. The method (1000) of any one of Clauses 1-9, wherein the thermal barrier layer (2100) has a thermal diffusivity of at most 0.0035 cm²/sec.
11. The method (1000) of any one of Clauses 1-10, wherein the adhesive (2200) comprises a film adhesive.
12. The method (1000) of any one of Clauses 1-11, wherein the adhesive (2200) comprises bismaleimide.
13. The method (1000) of any one of Clauses 1-12, wherein the curing (1200) the adhesive (2200) comprises bagging an assembly (5050) comprising the adhesive (2200) and the thermal barrier layer (2100) on a tool (3050) with a vacuum bag (3700) and drawing a vacuum with a vacuum pump (3800).
14. The method (1000) of any one of Clauses 1-13, wherein the curing (1200) the adhesive (2200) is performed under conditions that minimize migration of the adhesive (2200) into the thermal barrier layer (2100).
15. The method (1000) of any one of Clauses 1-14, wherein the adhesive (2200) at least partially seals the non-tool-side surface (4200) of the thermal barrier layer (2100).
16. The method (1000) of any one of Clauses 1-15, wherein the curing (1200) the adhesive (2200) comprises subjecting the adhesive (2200) to a cure temperature (T) during an adhesive curing cycle (7020), the cure temperature (T) comprises a first adhesive curing hold temperature (T_{B1}) for a first adhesive curing temperature hold time (t_{B1}) followed by a second adhesive curing hold temperature (T_{B2}) for a second adhesive curing temperature hold time (t_{B1}), wherein the second adhesive curing hold temperature (T_{B2}) is substantially greater than the first adhesive curing hold temperature (T_{B1}).
17. The method (1000) of Clause 16, wherein the second adhesive curing hold temperature (T_{B2}) is at least 20 percent greater than the first adhesive curing hold temperature (T_{B1}).
18. The method (1000) of Clause 16 or 17, wherein the second adhesive curing hold temperature (T_{B2}) is at least 30 percent greater than the first adhesive curing hold temperature (T_{B1}).
19. The method (1000) of any one of Clauses 16-18, wherein the second adhesive curing hold temperature (T_{B2}) is at least 40 percent greater than the first adhesive curing hold temperature (T_{B1}).
20. The method (1000) of any one of Clauses 16-19, wherein the first adhesive curing hold temperature (T_{B1}) and the first adhesive curing temperature hold time (t_{B1}) are sufficient to achieve a degree of cure of at least 10 percent.
21. The method (1000) of any one of Clauses 16-20, wherein the first adhesive curing hold temperature (T_{B1}) and the first adhesive curing temperature hold time (t_{B1}) are sufficient to achieve a degree of cure of at least 20 percent.
22. The method (1000) of any one of Clauses 16-21, wherein the first adhesive curing hold temperature (T_{B1}) and the first adhesive curing temperature hold time (t_{B1}) are sufficient to achieve a degree of cure of at least 30 percent.
23. The method (1000) of any one of Clauses 16-22, wherein the first adhesive curing hold temperature (T_{B1}) and the first adhesive curing temperature hold time (t_{B1}) are sufficient to achieve a degree of cure of at least 40 percent.
24. The method (1000) of any one of Clauses 16-23, wherein the first adhesive curing hold temperature (T_{B1}) and the first adhesive curing temperature hold time (t_{B1}) are sufficient to achieve a degree of cure between 0 to 50 percent.
25. The method (1000) of any one of Clauses 16-24, wherein the second adhesive curing hold temperature (T_{B2}) and the second adhesive curing temperature hold time (t_{B2}) are sufficient to achieve a degree of cure of at least 70 percent.
26. The method (1000) of any one of Clauses 16-25, wherein the second adhesive curing hold temperature (T_{B2}) and the second adhesive curing temperature hold time (t_{B2}) are sufficient to achieve a degree of cure of at least 80 percent.
27. The method (1000) of any one of Clauses 16-26, wherein the second adhesive curing hold temperature (T_{B2}) and the second adhesive curing temperature hold time (t_{B2}) are sufficient to achieve a degree of cure of at least 90 percent.
28. The method (1000) of any one of Clauses 16-27, wherein the second adhesive curing hold temperature (T_{B2}) and the second adhesive curing temperature hold time (t_{B2}) are sufficient to achieve a degree of cure of at least 95 percent.
29. The method (1000) of any one of Clauses 16-28, wherein the second adhesive curing hold temperature (T_{B2}) and the second adhesive curing temperature hold time (t_{B2}) are sufficient to achieve a degree of cure of between 70 and 99 percent.
30. The method (1000) of any one of Clauses 16-29, wherein the curing (1200) the adhesive (2200) further comprises subjecting the adhesive (2200) to a cure pressure (P) during the adhesive curing cycle (7020), the cure pressure (P) comprising a first adhesive curing hold pressure (P_{B1}) for a first adhesive curing pressure hold time (t_{B3}) followed by a second adhesive curing hold pressure (P_{B2}) for a second adhesive curing pressure hold time (t_{B4}), wherein the second adhesive curing hold pressure (P_{B2}) is substantially greater than the first adhesive curing hold pressure (P_{B1}).
31. The method (1000) of Clause 30, wherein the second adhesive curing hold pressure (P_{B2}) is at least 5 times greater than the first adhesive curing hold pressure (P_{B1}).
32. The method (1000) of Clause 30 or 31, wherein the second adhesive curing hold pressure (P_{B2}) is at least 10 times greater than the first adhesive curing hold pressure (P_{B1}).
33. The method (1000) of any one of Clauses 30-32, wherein the second adhesive curing hold pressure (P_{B2}) is at least 15 times greater than the first adhesive curing hold pressure (P_{B1}).
34. The method (1000) of any one of Clauses 30-33, wherein the first adhesive curing hold pressure (P_{B1}) is between about 0 kPa and 104 kPa (0 psig and 15 psig).
35. The method (1000) of any one of Clauses 30-34, wherein the first adhesive curing pressure hold time (t_{B3}) is at most 240 minutes.
36. The method (1000) of any one of Clauses 30-35, wherein the first adhesive curing pressure hold time (t_{B3}) is between about 0 minutes and 240 minutes.
37. The method (1000) of any one of Clauses 30-36, wherein the second adhesive curing hold Pressure (P_{B2}) is between about 206 kPa and 759 kPa (30 psig and 110 psig).
38. The method (1000) of Clause 37, wherein the second adhesive curing pressure hold time (t_{B4}) is at least 1 hour.
39. The method (1000) of Clause 37 or 38, wherein the second adhesive curing pressure hold time (t_{B4}) is between about 1 hour and 10 hours.
40. The method (1000) of any one of Clauses 30-39, wherein the second adhesive curing pressure hold time (t_{B4}) starts as soon as the pressure reaches the second adhesive curing hold pressure (P_{B2}).
41. The method (1000) of Clause 40, wherein the second adhesive curing pressure hold time (t_{B4}) begins after elapsion of at least about 25 percent of the first adhesive curing temperature hold time (t_{B1}).
42. The method (1000) of Clause 41, wherein the second adhesive curing temperature hold time (t_{B2}) begins after a beginning of the second adhesive curing pressure hold time (t_{B4}).
43. The method (1000) of any one of Clauses 40-42, wherein the second adhesive curing pressure hold time (t_{B4}) begins after elapsion of at least about 50 percent of the first adhesive curing temperature hold time (t_{B1}).
44. The method (1000) of any one of Clauses 40-43, wherein the second adhesive curing pressure hold time (t_{B4}) begins after elapsion of the first adhesive curing temperature hold time (t_{B1}).
45. The method (1000) of any one of Clauses 1-44, wherein the curing (1200) the adhesive (2200) is performed within an autoclave (8100).
46. The method (1000) of any one of Clauses 1-45, wherein the polymer matrix composite material (2300) comprises a reinforcement material (2320) and a matrix material (2310).
47. The method (1000) of Clause 46, wherein the adhesive (2200) substantially minimize migration (9100) of the matrix material (2310) of the polymer matrix composite material (2300) into the coated thermal barrier layer (5000).
48. The method (1000) of any one of Clauses 1-47, wherein the co-bonding (1300) the polymer matrix composite material (2300) onto the coated surface (5100) comprises placing a second adhesive (6200) between the polymer matrix composite material (2300) and the coated surface (5100).
49. The method (1000) of Clause 48, wherein the second adhesive (6200) comprises a film adhesive.
50. The method (1000) of Clause 48 or 49, wherein the second adhesive (6200) comprises bismaleimide.
51. The method (1000) of any one of Clauses 1-50, wherein the co-bonding (1300) the polymer matrix composite material (2300) onto the coated surface (5100) comprises bagging an assembly (5060) comprising the polymer matrix composite material (2300) and the coated thermal barrier layer (5000) on a tool (3050) with a vacuum bag (3700) and drawing a vacuum with a vacuum pump (3800).
52. The method (1000) of any one of Clauses 1-51, wherein the co-bonding (1300) the polymer matrix composite material (2300) is performed within an autoclave (8100).
53. A method (1000) for manufacturing a thermally protected polymer composite structure (2000), the method (1000) comprising:
   positioning (1050) a thermal barrier material (3100) onto a work surface (3400) of a tool (3050);
   curing (1100) the thermal barrier material (3100) on the tool (3050) to yield a thermal barrier layer (2100), wherein the thermal barrier layer (2100) is porous and comprises a tool-side surface (4100) and a non-tool-side surface (4200) opposed from the tool-side surface (4100);
   curing (1200) an adhesive (2200) onto the non-tool-side surface (4200) of the thermal barrier layer (2100) to yield a coated thermal barrier layer (5000) comprising the tool-side surface (4100) and a coated surface (5100) opposed from the tool-side surface (4100); and
   co-bonding (1300) a polymer matrix composite material (2300) onto the coated surface (5100) of the coated thermal barrier layer (5000).
54. The method (1000) of Clause 53, further comprising positioning a release layer (3500) between the thermal barrier material (3100) and the work surface (3400) prior to the curing (1100) the thermal barrier material (3100) on the tool (3050).
55. The method (1000) of Clause 54, wherein the release layer (3500) comprises a fluoropolymer.
56. The method (1000) of any one of Clauses 53-55, wherein the curing (1100) the thermal barrier material (3100) comprises curing the thermal barrier material (3100) to achieve a degree of cure of at least 30 percent.
57. The method (1000) of any one of Clauses 53-56, wherein the curing (1100) the thermal barrier material (3100) comprises curing the thermal barrier material (3100) to achieve a degree of cure of at least 50 percent.
58. The method (1000) of any one of Clauses 53-57, wherein the curing (1100) the thermal barrier material (3100) comprises curing the thermal barrier material (3100) to achieve a degree of cure of at least 70 percent.
59. A method (1000) for manufacturing a thermally protected polymer composite structure (2000), the method (1000) comprising:
   positioning (1050) a thermal barrier material (3100) onto a work surface (3400) of a tool (3050), wherein the thermal barrier material (3100) comprises a thermal barrier reinforcement material (4300) and a thermal barrier matrix material (4400), wherein the thermal barrier reinforcement material (4300) comprises at least one of glass, carbon, and quartz, wherein the thermal barrier matrix material (4400) comprises polyceramic resin;
   curing (1100) the thermal barrier material (3100) on the tool (3050) to yield a thermal barrier layer (2100), wherein the thermal barrier layer (2100) is porous and comprises a tool-side surface (4100) and a non-tool-side surface (4200) opposed from the tool-side surface (4100);
   curing (1200) an adhesive (2200) onto the non-tool-side surface (4200) of the thermal barrier layer (2100) at a first adhesive curing hold temperature (T_{B1}) followed by a second adhesive curing hold temperature (T_{B2}) to yield a coated thermal barrier layer (5000) comprising the tool-side surface (4100) and a coated surface (5100) opposed from the tool-side surface (4100), wherein the adhesive (2200) comprises at least one of polyimide and bismaleimide, wherein the second adhesive curing hold temperature (T_{B2}) is about at least 20 percent greater than the first adhesive curing hold temperature (T_{B1}); and
   co-bonding (1300) a polymer matrix composite material (2300) onto the coated surface (5100) of the coated thermal barrier layer (5000), wherein the polymer matrix composite material (2300) comprises a reinforcement material (2320) and a matrix material (2310).
60. A thermally protected polymer composite structure (2000) comprising:
   a thermal barrier layer (2100), the thermal barrier layer (2100) being porous and comprising a tool-side surface (4100) and a non-tool-side surface (4200) opposed from the tool-side surface (4100);
   an adhesive (2200) disposed onto the non-tool-side surface (4200) of the thermal barrier layer (2100) to yield a coated thermal barrier layer (5000) comprising a coated surface (5100); and
   a polymer matrix composite material (2300) disposed onto the coated surface (5100) of the coated thermal barrier layer (5000).
61. The thermally protected polymer composite structure (2000) of Clause 60, wherein the adhesive (2200) is cured onto the non-tool-side surface (4200) of the thermal barrier layer (2100).
62. The thermally protected polymer composite structure (2000) of Clause 60 or 61, wherein the polymer matrix composite material (2300) is co-bonded onto the coated surface (5100) of the coated thermal barrier layer (5000).
63. A method (1000) for manufacturing a thermally protected polymer composite structure (2000) using a thermal barrier layer (2100), the thermal barrier layer (2100) being porous and comprising a tool-side surface (4100) and a non-tool-side surface (4200) opposed from the tool-side surface (4100), the method (1000) comprising:
   sealing the non-tool-side surface (4200) of the thermal barrier layer (2100) with an adhesive (2200) to yield a coated thermal barrier layer (5000) comprising a coated surface (5100); and
   joining a polymer matrix composite material (2300) onto the coated surface (5100) of the coated thermal barrier layer (5000).

## Claims

1. A method (1000) for manufacturing a thermally protected polymer composite structure (2000) using a thermal barrier layer (2100), the thermal barrier layer (2100) being porous and comprising a tool-side surface (4100) and a non-tool-side surface (4200) opposed from the tool-side surface (4100), the method (1000) comprising:
curing (1200) an adhesive (2200) onto the non-tool-side surface (4200) of the thermal barrier layer (2100) to yield a coated thermal barrier layer (5000) comprising a coated surface (5100); and
co-bonding (1300) a polymer matrix composite material (2300) onto the coated surface (5100) of the coated thermal barrier layer (5000).

2. The method (1000) of Claim 1, wherein:
the thermal barrier layer (2100) comprises a thermal barrier reinforcement material (4300) and a thermal barrier matrix material (4400); and/or
the thermal barrier matrix material (4400) comprises polyceramic resin.

3. The method (1000) of Claim 1 or 2, wherein:
the curing (1200) the adhesive (2200) is performed under conditions that minimize migration of the adhesive (2200) into the thermal barrier layer (2100); and/or
the adhesive (2200) at least partially seals the non-tool-side surface (4200) of the thermal barrier layer (2100); and/or
the thermal barrier layer (2100) has a thermal diffusivity of at most 0.0035 cm²/sec.

4. The method (1000) of any one of Claims 1-3, wherein the curing (1200) the adhesive (2200) comprises subjecting the adhesive (2200) to a cure temperature (T) during an adhesive curing cycle (7020), the cure temperature (T) comprises a first adhesive curing hold temperature (T_{B1}) for a first adhesive curing temperature hold time (t_{B1}) followed by a second adhesive curing hold temperature (T_{B2}) for a second adhesive curing temperature hold time (t_{B1}), wherein the second adhesive curing hold temperature (T_{B2}) is substantially greater than the first adhesive curing hold temperature (T_{B1}).

5. The method (1000) of Claim 4, wherein:
the first adhesive curing hold temperature (T_{B1}) and the first adhesive curing temperature hold time (t_{B1}) are sufficient to achieve a degree of cure between 0 to 50 percent; and/or
the second adhesive curing hold temperature (T_{B2}) and the second adhesive curing temperature hold time (t_{B2}) are sufficient to achieve a degree of cure of between 70 and 99 percent.

6. The method (1000) of Claim 4 or 5, wherein the curing (1200) the adhesive (2200) further comprises subjecting the adhesive (2200) to a cure pressure (P) during the adhesive curing cycle (7020), the cure pressure (P) comprising a first adhesive curing hold pressure (P_{B1}) for a first adhesive curing pressure hold time (t_{B3}) followed by a second adhesive curing hold pressure (P_{B2}) for a second adhesive curing pressure hold time (t_{B4}), wherein the second adhesive curing hold pressure (P_{B2}) is substantially greater than the first adhesive curing hold pressure (P_{B1}).

7. The method (1000) of Claim 6, wherein:
the second adhesive curing hold pressure (P_{B2}) is at least 5 times greater than the first adhesive curing hold pressure (P_{B1}); and/or
the first adhesive curing hold pressure (P_{B1}) is between about 0 kPa and 104 kPa (0 psig and 15 psig); and/or
the first adhesive curing pressure hold time (t_{B3}) is between about 0 minutes and 240 minutes.

8. The method (1000) of Claim 6 or 7, wherein the second adhesive curing hold Pressure (P_{B2}) is between about 206 kPa and 759 kPa (30 psig and 110 psig), preferably wherein the second adhesive curing pressure hold time (t_{B4}) is between about 1 hour and 10 hours.

9. The method (1000) of any one of Claims 6-8, wherein the second adhesive curing pressure hold time (t_{B4}) starts as soon as the pressure reaches the second adhesive curing hold pressure (P_{B2}), preferably wherein the second adhesive curing pressure hold time (t_{B4}) begins after elapsion of at least about 25 percent of the first adhesive curing temperature hold time (t_{B1}).

10. The method (1000) of any one of Claims 1-9, wherein:
the polymer matrix composite material (2300) comprises a reinforcement material (2320) and a matrix material (2310), preferably wherein the adhesive (2200) substantially minimize migration (9100) of the matrix material (2310) of the polymer matrix composite material (2300) into the coated thermal barrier layer (5000); and/or
the co-bonding (1300) the polymer matrix composite material (2300) onto the coated surface (5100) comprises placing a second adhesive (6200) between the polymer matrix composite material (2300) and the coated surface (5100).

11. A method (1000) for manufacturing a thermally protected polymer composite structure (2000), the method (1000) comprising:
positioning (1050) a thermal barrier material (3100) onto a work surface (3400) of a tool (3050);
curing (1100) the thermal barrier material (3100) on the tool (3050) to yield a thermal barrier layer (2100), wherein the thermal barrier layer (2100) is porous and comprises a tool-side surface (4100) and a non-tool-side surface (4200) opposed from the tool-side surface (4100);
curing (1200) an adhesive (2200) onto the non-tool-side surface (4200) of the thermal barrier layer (2100) to yield a coated thermal barrier layer (5000) comprising the tool-side surface (4100) and a coated surface (5100) opposed from the tool-side surface (4100); and
co-bonding (1300) a polymer matrix composite material (2300) onto the coated surface (5100) of the coated thermal barrier layer (5000).

12. The method (1000) of Claim 11, wherein the curing (1100) the thermal barrier material (3100) comprises curing the thermal barrier material (3100) to achieve a degree of cure of at least 30 percent.

13. A method (1000) for manufacturing a thermally protected polymer composite structure (2000), the method (1000) comprising:
positioning (1050) a thermal barrier material (3100) onto a work surface (3400) of a tool (3050), wherein the thermal barrier material (3100) comprises a thermal barrier reinforcement material (4300) and a thermal barrier matrix material (4400), wherein the thermal barrier reinforcement material (4300) comprises at least one of glass, carbon, and quartz, wherein the thermal barrier matrix material (4400) comprises polyceramic resin;
curing (1100) the thermal barrier material (3100) on the tool (3050) to yield a thermal barrier layer (2100), wherein the thermal barrier layer (2100) is porous and comprises a tool-side surface (4100) and a non-tool-side surface (4200) opposed from the tool-side surface (4100);
curing (1200) an adhesive (2200) onto the non-tool-side surface (4200) of the thermal barrier layer (2100) at a first adhesive curing hold temperature (T_{B1}) followed by a second adhesive curing hold temperature (T_{B2}) to yield a coated thermal barrier layer (5000) comprising the tool-side surface (4100) and a coated surface (5100) opposed from the tool-side surface (4100), wherein the adhesive (2200) comprises at least one of polyimide and bismaleimide, wherein the second adhesive curing hold temperature (T_{B2}) is about at least 20 percent greater than the first adhesive curing hold temperature (T_{B1}); and
co-bonding (1300) a polymer matrix composite material (2300) onto the coated surface (5100) of the coated thermal barrier layer (5000), wherein the polymer matrix composite material (2300) comprises a reinforcement material (2320) and a matrix material (2310).

14. A thermally protected polymer composite structure (2000) comprising:
a thermal barrier layer (2100), the thermal barrier layer (2100) being porous and comprising a tool-side surface (4100) and a non-tool-side surface (4200) opposed from the tool-side surface (4100);
an adhesive (2200) disposed onto the non-tool-side surface (4200) of the thermal barrier layer (2100) to yield a coated thermal barrier layer (5000) comprising a coated surface (5100); and
a polymer matrix composite material (2300) disposed onto the coated surface (5100) of the coated thermal barrier layer (5000).

15. A method (1000) for manufacturing a thermally protected polymer composite structure (2000) using a thermal barrier layer (2100), the thermal barrier layer (2100) being porous and comprising a tool-side surface (4100) and a non-tool-side surface (4200) opposed from the tool-side surface (4100), the method (1000) comprising:
sealing the non-tool-side surface (4200) of the thermal barrier layer (2100) with an adhesive (2200) to yield a coated thermal barrier layer (5000) comprising a coated surface (5100); and
joining a polymer matrix composite material (2300) onto the coated surface (5100) of the coated thermal barrier layer (5000).
